# EUROPÄISCHE PATENTSCHRIFT

(11) **EP 4 298 647 B1**
(45) Veröffentlichungstag und Bekanntmachung des Hinweises auf die Patenterteilung: **21.05.2025**
(21) Anmeldenummer: 22710013.8
(22) Anmeldetag: 24.02.2022
(51) Int. Cl.: H01B 13/012, B29C 33/30, B29C 44/12, B29C 44/58, B29C 44/60, B29C 33/40, B29C 33/20, B29C 33/26, B29C 33/50

(54) **HERSTELLUNGSFORM ZUR HERSTELLUNG EINES KABELBAUMS, SYSTEM UND VERFAHREN**
MANUFACTURING MOULD FOR MANUFACTURING A CABLE HARNESS, SYSTEM, AND METHOD
MOULE DE FABRICATION POUR LA FABRICATION D'UN FAISCEAU DE CÂBLES, SYSTÈME ET PROCÉDÉ

(30) Priorität: 24.02.2021 DE 102021104405
(43) Veröffentlichungstag der Anmeldung: 03.01.2024
(73) Patentinhaber: Yazaki Systems Technologies GmbH, 93059 Regensburg (DE)
(72) Erfinder: NAVARRO MÁLAGA, Aldo, 73730 Esslingen am Neckar (DE)
(74) Vertreter: Patentanwaltskanzlei WILHELM & BECK
(86) Internationale Anmeldenummer: PCT/EP2022/054707
(87) Internationale Veröffentlichungsnummer: WO 2022/180181

(56) Entgegenhaltungen:
- EP-A2- 0 376 131
- JP-A- 2012 248 409
- US-A- 3 643 911
- US-A- 6 086 037

## Beschreibung

Die Erfindung betrifft eine adaptierbare Herstellungsform zur Herstellung eines Kabelbaums gemäß Patentanspruch 1, ein System gemäß Patentanspruch 9 und ein Verfahren gemäß Patentanspruch 10.

Diese Patentanmeldung beansprucht die Priorität der deutschen Patentanmeldung 10 2021 104 405.7 eingereicht am 24. Februar 2021 mit dem Titel "Herstellungsform zur Herstellung eines Kabelbaums, System und Verfahren".

Aus US 6,086,037 ist eine Herstellungsform zur Herstellung eines Kabelbaums bekannt. Aus EP 0 376 131 A2 und JP 2012 248409 A sind Verfahren zur Herstellung eines Kabelbaumes bekannt.

Aus US 3 643 911 A ist eine Gießform zur Anwendung bei Schaumprodukten bekannt. Es ist Aufgabe der Erfindung, eine verbesserte Herstellungsform, ein verbessertes System und ein verbessertes Verfahren bereitzustellen.

Diese Aufgabe wird mittels einer Herstellungsform gemäß Patentanspruch 1, eines Systems gemäß Patentanspruch 9 und eines Verfahrens gemäß Patentanspruch 10 gelöst. Vorteilhafte Ausführungsformen sind in den abhängigen Ansprüchen angegeben. Es wurde erkannt, dass eine besonders geeignete Herstellungsform zur Herstellung eines Kabelbaums für eine Vorrichtung, insbesondere ein Fahrzeug oder einer Maschine, dadurch bereitgestellt werden kann, dass die Herstellungsform einen Formkörper sowie wenigstens einen ersten Aktuator aufweist. Der Formkörper ist aus, vorzugsweise einem einstückig und materialeinheitlich, elastisch reversibel (bei 20° Celsius) verformbaren Werkstoff ausgebildet. Der Formkörper umschließt zumindest abschnittsweise einen Formraum. Der erste Aktuator ist mit einem ersten Teilabschnitt des Formkörpers gekoppelt, insbesondere verbunden. Der erste Teilabschnitt begrenzt innenseitig zumindest abschnittsweise den Formraum. In dem Formraum ist der Kabelbaum zumindest herstellbar, wobei der erste Aktuator ausgebildet ist, den ersten Teilabschnitt zwischen einer ersten Position und einer zur ersten Position unterschiedlichen zweiten Position reversibel zu verschwenken, insbesondere zu verformen.

Diese Ausgestaltung hat den Vorteil, dass die Herstellungsform durch die Verformbarkeit mittels des Aktuators adaptierbar ist und an die gegebenen Umstände beziehungsweise einzelnen Verfahrensschritte zur Herstellung eines Kabelbaums auf einfache Weise angepasst werden kann. Insbesondere kann durch den Aktuator die geometrische Ausgestaltung des Formkörpers durch die Verformung im ersten Teilabschnitt adaptiert werden.

In einer weiteren Ausführungsform weist der Formkörper eine Öffnung zum Einbringen zumindest eines elektrischen Kabels in den Formraum auf. Die Öffnung mündet in dem Formraum. Der erste Teilabschnitt grenzt an die Öffnung an. In der zweiten Position des ersten Teilabschnitts ist die Öffnung gegenüber der ersten Position des ersten Teilabschnitts aufgeweitet. Diese Ausgestaltung hat den Vorteil, dass durch den Aktuator ein Öffnungsquerschnitt der Öffnung schaltbar aufgeweitet und reduziert werden kann und dadurch das Einlegen des elektrischen Kabels in den Formraum bei geöffnetem Zustand der Öffnung besonders erleichtert ist. Insbesondere ist dadurch ein automatisiertes Einlegen des elektrischen Kabels in den Formraum möglich. Zusätzlich wird in der ersten Position des ersten Teilabschnitts vermieden, dass ungewollt das elektrische Kabel aus dem Formraum herausrutscht. Dadurch kann eine besonders hohe Prozesssicherheit sichergestellt werden.

In einer weiteren Ausführungsform weist der der Formkörper einen Formgrund auf, wobei in der ersten Position der erste Teilabschnitt parallel oder schräg geneigt zum Formgrund ausgerichtet ist, wobei in der zweiten Position der erste Teilabschnitt vom Formgrund weiter beabstandet ist als in der ersten Position. Von besonderem Vorteil ist, wenn in der zweiten Position der erste Teilabschnitt vom Formgrund aus der ersten Position weggebogen und/oder weggeschwenkt ist. In einer Alternative ist in der zweiten Position der erste Teilabschnitt näher zum Formgrund angeordnet als in der ersten Position. Von besonderem Vorteil ist, wenn in der zweiten Position der erste Teilabschnitt zum Formgrund aus der ersten Position hingebogen oder hingeschwenkt ist. Durch das Biegen und/oder Schwenken des ersten Teilabschnitts kann eine weitere Verformung des Formkörpers im Wesentlich vermieden werden.

In einer weiteren Ausführungsform weist die adaptierbare Herstellungsform einen zweiten Aktuator auf, wobei der Formkörper einen zweiten Teilabschnitt aufweist. Der zweite Teilabschnitt ist versetzt zu dem ersten Teilabschnitt angeordnet. Der zweite Aktuator ist an und/oder in dem zweiten Teilabschnitt angeordnet, wobei der zweite Aktuator ausgebildet ist, den zweiten Teilabschnitt zwischen einer dritten Position und einer zur dritten Position unterschiedlichen vierten Position reversibel zu verschwenken, insbesondere zu verformen.

In einer weiteren Ausführungsform erstreckt sich die Öffnung in ihrer Haupterstreckungsrichtung entlang einer ersten Richtung. Der zweite Teilabschnitt ist gegenüberliegend in einer zweiten Richtung senkrecht zu der ersten Richtung zu dem ersten Teilabschnitt angeordnet. Der zweite Teilabschnitt begrenzt gegenüberliegend zu dem ersten Teilabschnitt die Öffnung zumindest abschnittsweise. In der ersten Position des ersten Teilabschnitts und in der dritten Position des zweiten Teilabschnitts weist die Öffnung eine erste minimale Öffnungsbreite in der zweiten Richtung auf. In der zweiten Position des ersten Teilabschnitts und in der vierten Position des zweiten Teilabschnitts weist die Öffnung eine zweite minimale Öffnungsbreite in der zweiten Richtung auf, die größer ist als die erste Öffnungsbreite.

Dadurch kann die Öffnung zum Einlegen des Kabels durch die beiden Aktuatoren besonders weit aufgeweitet werden, sodass das Einlegen des elektrischen Kabels besonders einfach sowohl manuell als auch automatisiert erfolgen kann. Die erste minimale Öffnungsbreite kann dabei derart gewählt sein, dass die erste minimale Öffnungsbreite kleiner eines minimalen Außendurchmessers des kleinsten der elektrischen Kabel gewählt ist. Dadurch wird ein Herausrutschen des elektrischen Kabels aus dem Formraum vermieden. Die erste minimale Öffnungsbreite kann dabei so gewählt sein, dass der erste Teilabschnitt und der zweite Teilabschnitt in Berührkontakt zueinander treten und dadurch die Öffnung vollständig verschlossen ist.

In einer weiteren Ausführungsform ist der erste Aktuator außenseitig des Formkörpers angeordnet.

In einer weiteren Ausführungsform ist der erste Aktuator in den Formkörper zumindest abschnittsweise, vorzugsweise vollständig, eingebettet. Die außenseitige Anordnung des ersten Aktuators am Formkörper hat den Vorteil, dass die adaptierbare Herstellungsform besonders einfach und kostengünstig herstellbar ist. Das Einbetten des ersten Aktuators in den Formkörper hat den Vorteil, dass umfangsseitig der Aktuator vollständig durch den ersten Werkstoff des Formkörpers umschlossen ist und dadurch eine Beschädigung, beispielsweise durch Flüssigkeiten, des ersten Aktuators vermieden werden kann.

Von besonderem Vorteil ist, wenn der Formkörper einstückig und materialeinheitlich ausgebildet ist.

In einer weiteren Ausführungsform weist der erste Aktuator wenigstens einen Druckraum auf, wobei der Druckraum mit einem druckbeaufschlagten Druckfluid füllbar ist, um den ersten Teilabschnitt zwischen der ersten Position und der zweiten Position zu bewegen.

In einer weiteren Ausführungsform ist der erste Aktuator als dielektrischer Elastomer-Aktor ausgebildet. Dadurch kann die adaptierbare Herstellungsform eine besonders dünne Wandstärke aufweisen.

In einer weiteren Ausführungsform ist der erste Aktuator ausgebildet, beim Schwenken des ersten Teilabschnitts zwischen der ersten Position und der zweiten Position den Formkörper elastisch reversibel zu verformen. Dadurch kann auf weitere mechanischen Gelenke verzichtet werden.

In einer weiteren Ausführungsform schließt in der zweiten Position der erste Teilabschnitt gegenüber der ersten Position einen Winkel ein, wobei der Winkel wenigstens 20°, vorzugsweise wenigstens 40°, vorzugsweise wenigstens 60° beträgt.

Ein System zur Herstellung des Kabelbaums weist vorzugsweise ein Steuergerät und die adaptierbare Herstellungsform auf, die wie oben beschrieben ausgebildet ist. Das Steuergerät ist mit dem ersten Aktuator verbunden, wobei das Steuergerät ausgebildet ist, den ersten Aktuator derart zu steuern, dass der erste Aktuator den ersten Teilabschnitt zwischen der ersten Position und der zweiten Position bewegt.

Mittels des Systems kann automatisiert die Herstellungsform gesteuert und automatisiert der Kabelbaum hergestellt werden.

Zusätzlich kann dazu das System eine Einlegevorrichtung aufweisen, die von dem Steuergerät gesteuert wird, um automatisiert elektrische Kabel im Zusammenspiel mit der adaptierbaren Herstellungsform in den Formraum einzulegen. Dabei steuert das Steuergerät die adaptierbare Herstellungsform und die Einlegevorrichtung derart an, dass diese im Zusammenspiel den Kabelbaum herstellen können. Die Einlegevorrichtung kann beispielsweise ein Roboterarm, beispielsweise ein Sechsachsroboter, sein. Alternativ kann die Einlegevorrichtung auch als autonom gesteuertes Fahrzeug oder autonom gesteuertes Luftfahrzeug ausgebildet sein, um das oder die elektrischen Kabel im Zusammenspiel mit der adaptierbaren Herstellungsform in den Formraum der adaptierbaren Herstellungsform einzulegen.

In einem Verfahren zur Herstellung des Kabelbaums wird die oben beschriebene adaptierbare Herstellungsform bereitgestellt, wobei der erste Aktuator den ersten Teilabschnitt aus der ersten Position in die zweite Position bewegt. Wenigstens ein erstes elektrisches Kabel wird zur Ausbildung eines Kabelbündels des Kabelbaums in den Formraum eingelegt. Alternativ können gleichzeitig auch mehrere elektrische Kabel als Kabelbündel in den Formraum eingelegt werden. Während des Einlegens des ersten elektrischen Kabels befindet sich der erste Teilabschnitt in der zweiten Position. Der erste Teilabschnitt befindet sich vorteilhafterweise in der zweiten Position, wenn der fertig hergestellte Kabelbaum aus dem Formraum entnommen wird. Dadurch ist der Kabelbaum besonders leicht entformbar. Auch ein Herausrutschen der eingelegten Kabel in den Formraum wird dadurch verhindert.

Von besonderem Vorteil ist, wenn zeitlich nach dem Einlegen des ersten elektrischen Kabels in den Formraum der erste Aktuator den ersten Teilabschnitt aus der zweiten Position in die erste Position bewegt und in der ersten Position der erste Teilabschnitt das erste elektrische Kabel in dem Formraum sichert. Dadurch wird ein ungewolltes Herausdrücken des elektrischen Kabels aus dem Formraum vermieden, sodass das elektrische Kabel besonders gut mit einem Schaumwerkstoff umspritzt werden kann.

In einer weiteren Ausführungsform bewegt zeitlich nach dem Einlegen des ersten elektrischen Kabels in den Formraum der erste Aktuator den ersten Teilabschnitt aus der ersten Position in die zweite Position, wobei in den Formraum ein Schaumwerkstoff eingebracht wird. Der Schaumwerkstoff umfließt das Kabelbündel zumindest abschnittsweise derart, dass das Kabelbündel in dem Schaumwerkstoff zumindest abschnittweise eingebettet ist. Zeitlich nach Einbringen des Schaumwerkstoffs bewegt der erste Aktuator den ersten Teilabschnitt von der zweiten Position in die erste Position. Diese Ausgestaltung hat den Vorteil, dass durch den ersten Teilabschnitt ein Aufschwimmen des Kabelbündels auf dem aufschäumenden Schaumwerkstoff vermieden wird, sodass ein sicheres Einbetten des Kabelbündels in dem Schaumwerkstoff sichergestellt ist, sodass diese über den Schaumwerkstoff miteinander verbunden sind. Dadurch kann auf ein aufwendiges Umwickeln der einzelnen Kabel zur Ausbildung des Kabelbaums verzichtet werden.

In einer weiteren Ausführungsform verformt der erste Aktuator beim Schwenken des ersten Teilabschnitts zwischen der ersten Position und der zweiten Position den Formkörper elastisch reversibel. Dadurch kann der Formkörper besonders einfach ausgebildet sein. Insbesondere kann auf mechanische Bauteile wie Scharniere verzichtet werden.

Von besonderem Vorteil ist, wenn während des Aufschäumens des Schaumwerkstoffs der erste Aktuator derart angesteuert wird, dass der erste Aktuator eine Gegenkraft bereitstellt, die ein Aufbiegen des ersten Teilabschnitts durch den aufschäumenden Schaumwerkstoff reduziert oder verhindert.

In einer weiteren Ausführungsform wird der Schaumwerkstoff zumindest teilweise ausgehärtet, wobei zeitlich nach zumindest teilweisem Aushärten des Schaumwerkstoffs der erste Aktuator den ersten Teilabschnitt von der ersten Position in die zweite Position bewegt und der Kabelbaum aus dem Formraum entnommen wird. Diese Ausgestaltung hat den Vorteil, dass auch das Entnehmen des Kabelbaums aus dem Formraum automatisiert erfolgen kann und dadurch die Herstellungskosten besonders gering sind.

In einer weiteren Ausführungsform bewegt zum Einlegen des ersten elektrischen Kabels in den Formraum der zweite Aktuator den zweiten Teilabschnitt von der dritten Position in die vierte Position, wobei das erste elektrische Kabel zwischen dem ersten Teilabschnitt und dem zweiten Teilabschnitt in den Formraum eingelegt wird. Dadurch, dass zwei Aktuatoren die Teilabschnitte auseinanderbewegen, ist die Öffnung zwischen den beiden Teilabschnitten besonders groß, sodass besonders gut das erste elektrische Kabel oder mehrere elektrische Kabel zur Ausbildung des Kabelbaums in den Formraum eingelegt werden können. Ebenso kann, wenn beide Teilabschnitte auseinanderbewegt werden, besonders gut der Schaumwerkstoff in den Formraum eingespritzt werden, um die in den Formraum eingelegten elektrischen Kabel miteinander mittels des Schaumwerkstoffes zu verbinden.

Nachfolgend wird die Erfindung anhand von Figuren näher erläutert. Dabei zeigen:
Figur 1 eine perspektivische schematische Darstellung eines Systems gemäß einer ersten Ausführungsform zur automatisierten Herstellung eines Kabelbaums;
Figur 2 einen Ausschnitt einer Schnittansicht entlang einer in Figur 1 gezeigten Schnittebene A-A durch das in Figur 1 gezeigte System;
Figur 3 einen Ausschnitt einer Schnittansicht entlang einer in Figur 2 gezeigten Schnittebene B-B durch das in den Figuren 1 und 2 gezeigte System;
Figur 4 den inFigur 3 gezeigten Ausschnitt der Schnittansicht entlang der in Figur 1 gezeigten Schnittebene B-B;
Figur 5 ein Ablaufdiagramm eines Verfahrens zur automatisierten Herstellung des Kabelbaums gemäß einer ersten Ausführungsform;
Figur 6 einen Ausschnitt einer Schnittansicht entlang der in Figur 2 gezeigten Schnittebene B-B durch das System während eines dritten Verfahrensschritts;
Figur 7 einen Ausschnitt einer Schnittansicht entlang der in Figur 2 gezeigten Schnittebene B-B durch das System nach einem vierten Verfahrensschritt;
Figur 8 einen Ausschnitt entlang einer in Figur 1 gezeigten Schnittebene B-B durch das in Figur 1 gezeigte System während eines zweiten Durchlaufs des dritten Verfahrensschritts;
Figur 9 einen Ausschnitt entlang der in Figur 2 gezeigten Schnittebene B-B durch das in Figur 1 gezeigte System nach mehrfachem Durchlauf des dritten Verfahrensschritts;
Figur 10 einen Ausschnitt entlang einer in Figur 1 gezeigten Schnittebene B-B durch das System während eines achten Verfahrensschritts zur Herstellung des Kabelbaums;
Figur 11 einen Ausschnitt einer Schnittansicht entlang der in Figur 2 gezeigten Schnittebene B-B durch ein System gemäß einer zweiten Ausführungsform;
Figur 12 die in Figur 11 gezeigte Schnittansicht mit der in Figur 11 gezeigten adaptierbaren Herstellungsform in geöffnetem Zustand;
Figur 13 einen Ausschnitt einer Schnittansicht entlang einer in Figur 1 gezeigten Schnittebene B-B durch ein System gemäß einer dritten Ausführungsform;
Figur 14 einen Ausschnitt einer Schnittansicht entlang der in Figur 2 gezeigten Schnittebene B-B durch ein System gemäß einer vierten Ausführungsform.

In den nachfolgenden Figuren wird auf ein Koordinatensystem Bezug genommen. Das Koordinatensystem weist eine x-Achse (Längsrichtung), eine y-Achse (Querrichtung) und eine z-Achse (Höhenrichtung) auf. Das Koordinatensystem ist beispielhaft als Rechtssystem ausgebildet. Das Koordinatensystem dient dazu, die folgenden Figuren erleichtert zu erläutern.

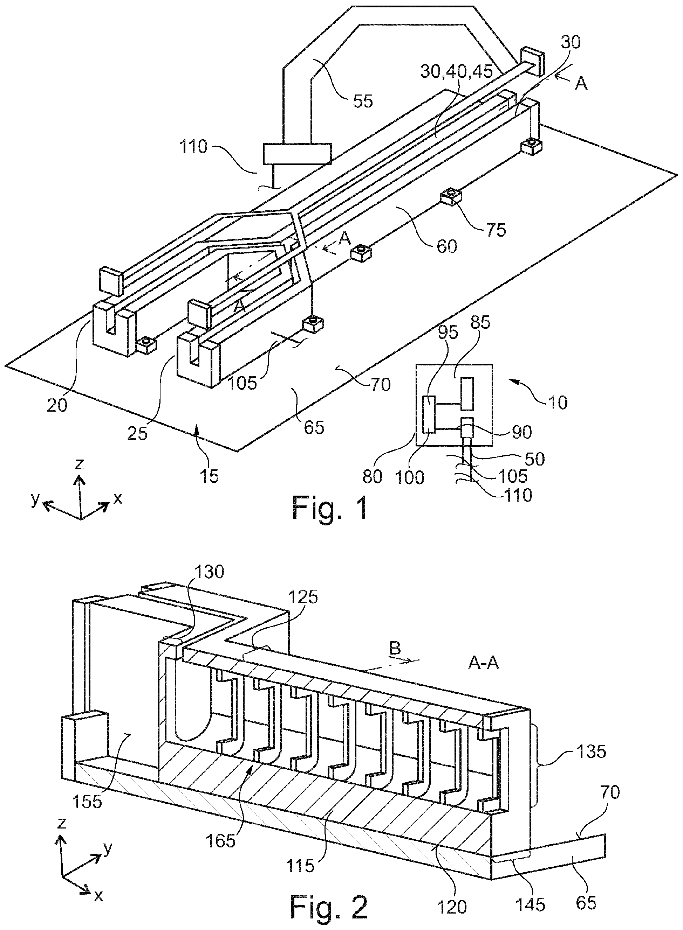

Figur 1 zeigt eine perspektivische schematische Darstellung eines Systems 10 gemäß einer ersten Ausführungsform zur automatisierten Herstellung eines Kabelbaums 15.

Der Kabelbaum 15 ist in Figur 1 oberhalb einer adaptierbaren Herstellungsform 60 des Systems 10 dargestellt. Der Kabelbaum 15 dient vorzugsweise in einem Kraftfahrzeug dazu, unterschiedliche Komponenten, beispielsweise ein Steuergerät mit Aktuatoren und/oder Sensoren elektrisch zu verbinden.

Der Kabelbaum 15 umfasst ein oder mehrere Kontakteinrichtungen 20, 25, 30 (symbolisch in Figur 1 dargestellt) und ein Kabelbündel 35 (strichliert in Figur 1 angedeutet). Das Kabelbündel 35 weist vorzugsweise ein oder mehrere elektrische Kabel 40, 45 auf. Jedes der elektrischen Kabel 40, 45 weist einen elektrisch leitfähigen Leiter auf. Der elektrische Leiter kann einen Draht oder mehrere Drähte aufweisen, die gebündelt, beispielsweise gedrillt oder geradlinig verlaufend, in einer Ummantelung des Kabels 45, 45 eingefasst sind.

Die Ummantelung des elektrischen Leiters weist einen elektrisch nicht leitfähigen Werkstoff auf und isoliert elektrisch den elektrischen Leiter gegenüber den anderen elektrischen Kabeln 40, 45. Der elektrische Leiter der elektrischen Kabel 40, 45 ist jeweils mit einem Kontaktelement der Kontakteinrichtungen 20, 25, 30 verbunden. Der elektrische Leiter verbindet elektrisch jeweils zugeordnete Kontaktelemente der Kontakteinrichtungen 20, 25, 30 miteinander.

Das System 10 zur Herstellung des Kabelbaums 15 weist beispielhaft ein Steuergerät 50, eine Verlegeeinrichtung 55 und die adaptierbare Herstellungsform 60 auf. Zusätzlich kann das System 10 ein Formbrett 65 aufweisen, das beispielhaft plattenförmig ausgebildet ist.

Das Formbrett 65 ist beispielhaft in einer xy-Ebene angeordnet, wobei auf einer ersten Oberseite 70 des Formbretts 65 mittels Befestigungsmittel 75, die beispielsweise als Klemmkörper ausgebildet sind, die adaptierbare Herstellungsform 60 an dem Formbrett 65 befestigt ist.

Die in Figur 1 gezeigte Ausgestaltung der adaptierbaren Herstellungsform 60 ist beispielhaft. Selbstverständlich kann die adaptierbare Herstellungsform 60 auch eine andere Ausgestaltung aufweisen.

Das Steuergerät 50 weist eine Steuereinrichtung 80, einen Datenspeicher 85 und eine Schnittstelle 90 auf. Die Steuereinrichtung 80 ist mit dem Datenspeicher 85 mittels einer ersten Verbindung 95 datentechnisch verbunden. Die Schnittstelle 90 ist mittels einer zweiten Verbindung 100 mit der Steuereinrichtung 80 verbunden. Vorzugsweise ist die zweite Verbindung 100 zur Datenübertragung ausgebildet. Mittels einer dritten Verbindung 105 ist die Schnittstelle 90 mit der adaptierbaren Herstellungsform 60 verbunden. Die Verlegeeinrichtung 55 ist mittels einer vierten Verbindung 110 mit der Schnittstelle 90 verbunden. Die erste bis vierte Verbindung 95, 100, 105, 110 sind vorzugsweise als Datenverbindung ausgebildet und dienen dazu, ein Datensignal zu übertragen. Dabei ist ein Strom zur Übertragung des Datensignals in der Verbindung 95, 100, 105, 110 relativ gering, insbesondere kleiner 0,1 A. Die dritte und vierte Verbindung 105, 110 kann insbesondere auch Teil eines Bussystems sein, wobei die Datensignale entsprechend dem Protokoll, mit dem das Bussystem arbeitet, ausgebildet sind. Auch kann mittels der dritten und/oder vierten Verbindung 105, 110 elektrische Energie zur Leistungsversorgung übertragen werden.

In dem Datenspeicher 85 ist ein Steuerverfahren beispielsweise als vordefinierter Algorithmus abgelegt, beispielsweise ein Computerprogramm zur Durchführung eines Verfahrens zur Herstellung des Kabelbaums 15 in vollautomatisierter Weise. Die Steuereinrichtung 80 steuert auf Grundlage des über die erste Verbindung 95 abgerufenen Algorithmus die adaptierbare Herstellungsform 60 und die Verlegeeinrichtung 55 mittels über die zweite Verbindung 100 an der Schnittstelle 90 bereitgestellten Steuersignale.

Figur 2 zeigt einen Ausschnitt einer Schnittansicht entlang einer in Figur 1 gezeigten Schnittebene A-A durch das in Figur 1 gezeigte System 10.

Die adaptierbare Herstellungsform 60 weist einen Formkörper 115 auf. Der Formkörper 115 weist einen bei 20° Celsius elastisch reversibel verformbaren ersten Werkstoff, beispielsweise Silikon und/oder Gummi und/oder Kautschuk und/oder Elastomer, auf. Ferner ist von Vorteil, wenn die Zugfestigkeit des ersten Werkstoffs in einem Bereich von 1 bis 30 N/mm² liegt. Dabei wird unter elastisch reversibel verstanden, dass die Verformung des ersten Werkstoffs des Formkörpers umkehrbar ist und nicht zu einer dauerhaften Verformung im Gegensatz zu einer plastischen Verformung führt.

Der Formkörper 115 ist in der Ausführungsform beispielhaft einstückig und materialeinheitlich ausgebildet und weist somit über seine gesamte Erstreckung den elastisch reversibel verformbaren ersten Werkstoff auf. Auch kann die adaptierbare Herstellungsform 60 mehrere Formkörper 115 aufweisen, die beispielsweise benachbart nebeneinander angeordnet sind und gemeinsam die adaptierbare Herstellungsform 60 ausbilden. Dabei ist jeder Formkörper 115 für sich elastisch reversibel verformbar, ohne dass dies vorzugsweise zu einer Verformung beispielsweise eines benachbarten, nächsten Formkörpers führt.

Der Formkörper 115 liegt mit einer Unterseite 120 auf der ersten Oberseite 70 an. Dabei ist die Unterseite 120 plan in einer xy-Ebene verlaufend ausgebildet. Der Formkörper 115 weist einen ersten Teilabschnitt 125 und einen gegenüberliegend zum ersten Teilabschnitt 125 angeordneten zweiten Teilabschnitt 130 auf. Im geschnittenen Bereich der adaptierbaren Herstellungsform 60 ist der zweite Teilabschnitt 130 in Figur 2 nicht dargestellt.

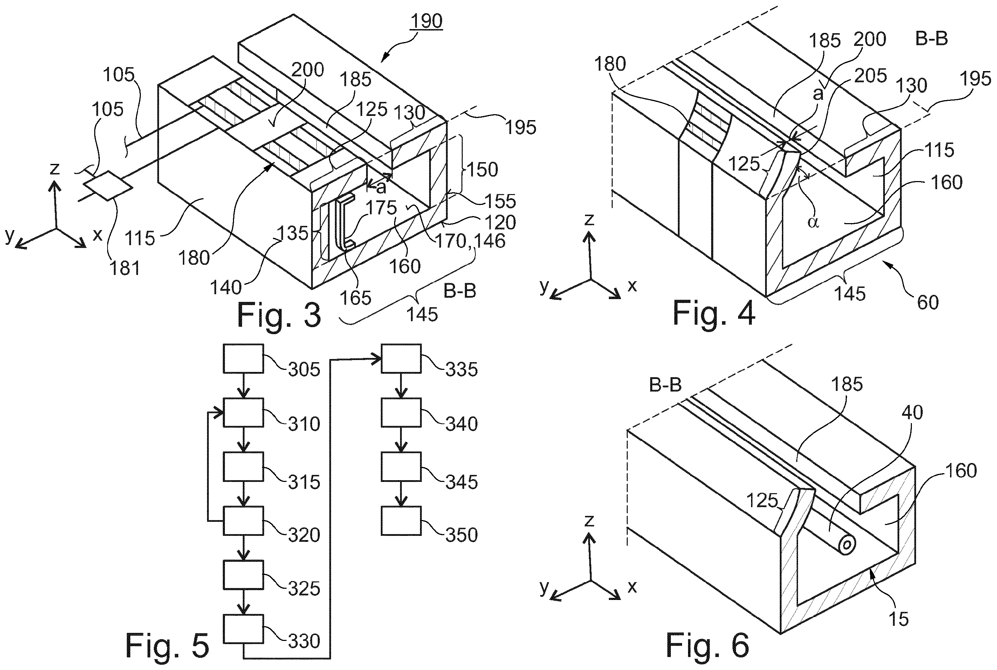

Figur 3 zeigt einen Ausschnitt einer Schnittansicht entlang einer in Figur 2 gezeigten Schnittebene B-B durch das in den Figuren 1 und 2 gezeigte System 10.

Der erste Teilabschnitt 125 schließt sich oberseitig an einen ersten Seitenabschnitt 135 des Formkörpers 115 an, wobei der erste Seitenabschnitt 135 außenseitig eine erste Seitenfläche 140 aufweist. Die erste Seitenfläche 140 kann beispielsweise zumindest abschnittsweise in einer xz-Ebene verlaufen. Der erste Seitenabschnitt 135 kann plattenartig ausgebildet sein oder zumindest parallel zur z-Achse verlaufend ausgerichtet sein. Unterseitig schließt sich der erste Seitenabschnitt 135 an einen Grundabschnitt 145 des Formkörpers 115 an. Der Grundabschnitt 145 schließt sich oberseitig an die Unterseite 120 des Formkörpers 115 an und ist im Wesentlichen plattenförmig parallel zur ersten Oberseite 70 des Formbretts 65 verlaufend ausgebildet. Der erste Seitenabschnitt 135 verläuft senkrecht zu dem Grundabschnitt 145 und ist unterseitig mit dem Grundabschnitt 145 verbunden. Der Grundabschnitt 145 kann in Höhenrichtung im Wesentlichen über die gesamte Erstreckung der adaptierbaren Herstellungsform 60 identisch ausgebildet sein.

Parallel zum ersten Seitenabschnitt 135 weist der Formkörper 115 einen zweiten Seitenabschnitt 150 auf. Außenseitig schließt sich der zweite Seitenabschnitt 150 an eine zweite Seitenfläche 155 an. Der zweite Seitenabschnitt 150 verläuft parallel beispielhaft zur ersten Seitenfläche 140 und senkrecht zum Grundabschnitt 145 . Der zweite Seitenabschnitt 150 verbindet den zweiten Teilabschnitt 130 in Höhenrichtung mit dem Grundabschnitt 145. Dabei ist der zweite Seitenabschnitt 150 auf einer zum ersten Teilabschnitt 125 abgewandten Seite mit dem zweiten Teilabschnitt 130 verbunden.

Innenseitig des Formkörpers 115 weist der Formkörper 115 einen Formraum 160 auf, wobei der Formraum 160 in den Figuren 2 und 3 unterseitig beispielhaft durch den Grundabschnitt 145 und seitlich durch den ersten Seitenabschnitt 135 und den zweiten Seitenabschnitt 150 sowie oberseitig durch den ersten und zweiten Teilabschnitt 125, 130 begrenzt wird.

In dem Formraum 160 können Stützrippen 165 (in Figur 2 besonders gut erkennbar) vorgesehen sein, die einstückig und materialeinheitlich mit dem Formkörper 115 ausgebildet sind. Die Stützrippen 165 sind stegartig ausgebildet und ragen in den Formraum 160. Jede der Stützrippen 165 weist eine Anlagefläche 175 auf, wobei die Anlagefläche 175 nach innen hin gegenüber einer inneren Umfangsseite 170 des Formkörpers 115, mit der der Formkörper 115 über die Teilabschnitte, Seitenabschnitte und Grundabschnitte 125, 130, 135, 145, 150 den Formraum 160 begrenzt, versetzt ist. Die Stützrippe 165 kann beispielsweise in einer yz-Ebene verlaufend ausgebildet sein.

Die innere Umfangsseite 170 weist am Grundabschnitt 145 einen Formgrund 146 auf, wobei der Formgrund 146 im Wesentlichen parallel zu der Unterseite 120 des Formkörpers 115 beispielhaft verläuft. In der Ausführungsform ist beispielhaft der Formgrund 146 plan ausgebildet.

In dem Formgrund 146 können Einbuchtungen (in Figur 3 nicht dargestellt) vorgesehen sein, um weitere Komponenten des Kabelbaums 15 bei der Herstellung des Kabelbaums 15 aufzunehmen. Beispielsweise kann in die Einbuchtung ein Halteelement zur Fixierung des Kabelbaums 15 in einem Karosserieelement einer Fahrzeugkarosserie positioniert sein.

Die adaptierbare Herstellungsform 60 weist wenigstens einen ersten Aktuator 180 (in Figur 3 schematisch dargestellt) auf. Vorzugsweise ist der erste Aktuator 180 als Soft-Robotic-Modul ausgebildet. Beispielsweise kann der erste Aktuator 180 als dielektrischer Elastomer-Aktor - auch als dielectric elastomer actuator bezeichnet - ausgebildet sein. Zur Darstellung des ersten Aktuators 180 ist der erste Teilabschnitt 125 inFigur 3 aufgebrochen dargestellt.

Der erste Aktuator 180 ist über die dritte Verbindung 105 mit der Schnittstelle 90 gekoppelt. Ferner kann die adaptierbare Herstellungsform 60 ein Steuermodul 181 aufweisen, das mit der dritten Verbindung 105 verbunden ist. Das Steuermodul 181 ist ferner mit dem ersten Aktuator 180 elektrisch verbunden. Auf Grundlage des über die dritte Verbindung 105 übertragenen Datensignals schaltet das Steuermodul 181 eine Leistungsversorgung des ersten Aktuators 180 mit elektrischer Energie frei bzw. unterbricht das Steuermodul 181 die Leistungsversorgung oder ändert die Polung der elektrischen Leistungsversorgung des ersten Aktuators 180.

In der Ausführungsform ist der erste Aktuator 180 in dem ersten Teilabschnitt 125 eingebettet. Dabei wird unter Einbetten verstanden, dass der erste Aktuator 180 vollständig durch den ersten Werkstoff des Formkörpers 115 umschlossen ist, sodass keine Umfangsseite des ersten Aktuators 180 sowohl innenseitig als auch außenseitig aus dem Formkörper 115 hervortritt. Dadurch ist die Umfangsseite des ersten Aktuators 180 vollständig durch den ersten Werkstoff des Formkörpers 115 bedeckt. Diese Ausgestaltung hat den Vorteil, dass der Formkörper 115 besonders leicht zu reinigen ist. Ferner kann eine Beschädigung des ersten Aktuators 180 verhindert werden.

Alternativ zu der inFigur 3 gezeigten Ausgestaltung wäre auch eine Positionierung des ersten Aktuators 180 außenseitig, beispielsweise auf einer dem Formraum 160 abgewandten Seite, beispielsweise einer zweiten Oberseite 200 des Formkörpers 115, möglich. Dabei kann beispielsweise der erste Aktuator 180 unterseitig stoffschlüssig mit der zweiten Oberseite 200 verbunden sein. Die stoffschlüssige Verbindung kann beispielsweise als Klebverbindung ausgebildet sein.

In der Ausführungsform erstreckt sich der erste Aktuator 180 ausschließlich im/am ersten Teilabschnitt 125. Selbstverständlich wäre auch denkbar, dass der erste Aktuator 180 andersartig ausgebildet ist und sich beispielsweise über den ersten Teilabschnitt 125 und den ersten Seitenabschnitt 135 oder andere Abschnitte 130, 135, 150 des Formkörpers 115 erstreckt.

In der Ausführungsform erstreckt sich im Wesentlichen über die gesamte Längserstreckung des ersten Teilabschnitts 125 der erste Aktuator 180. Auch kann in Längsrichtung und/oder Querrichtung sich der erste Aktuator 180 bereichsweise erstrecken.

Von besonderem Vorteil ist, wenn der erste Aktuator 180 sich überwiegend in Querrichtung des ersten Teilabschnitts 125 erstreckt. Dabei erstreckt sich der erste Aktuator 180 über wenigstens 50 %, vorzugsweise über 80 % des ersten Teilabschnitts 125. Von besonderem Vorteil ist, wenn die Erstreckung in Querrichtung kleiner als 95 %, insbesondere kleiner als 90 %, einer Maximalerstreckung in Querrichtung des ersten Teilabschnitts 125 ist.

In Querrichtung ist zwischen dem ersten Teilabschnitt 125 und dem zweiten Teilabschnitt 130 eine Öffnung 185 vorgesehen. Die Öffnung 185 ist als Schlitz ausgebildet und mündet innenseitig in dem Formraum 160. Die Öffnung 185 mündet außenseitig an der zweiten Oberseite 200. Die Öffnung 185 ist beispielsweise derartig ausgebildet, dass der erste und zweite Teilabschnitt 125, 130 beabstandet in Querrichtung angeordnet sind. An der Öffnung 185 sind der erste Teilabschnitt 125 und der zweite Teilabschnitt 130 stumpf ausgebildet. Auch wäre denkbar, dass der erste und zweite Teilabschnitt 125, 130 spitz aufeinander zulaufen. Auch könnten der erste und der zweite Teilabschnitt 125, 130 an der Öffnung 185 aneinander anliegen und so die Öffnung 185 vollständig verschließen.

Der erste Teilabschnitt 125 ist zwischen einer ersten Position (in Figur 3 dargestellt) und in einer zweiten Position (in Figur 4 dargestellt) reversibel zerstörungsfrei verschwenkbar. In der ersten Position sind der erste Teilabschnitt 125 und der zweite Teilabschnitt 130 in einer gemeinsamen Ebene 195, die beispielsweise als xy-Ebene ausgebildet ist, angeordnet. In der ersten Position verläuft beispielhaft der erste Teilabschnitt 125 parallel zum Formgrund 146 und zum Formbrett 65. In der ersten Position des ersten Teilabschnitts 125 ist ein minimaler Abstand a in Querrichtung zwischen dem ersten Teilabschnitt 125 und dem zweiten Teilabschnitt 130 minimiert. Der minimale Abstand a entspricht einer Öffnungsbreite der Öffnung 185.

Befindet sich der erste Teilabschnitt 125 in der ersten Position, ist der erste Teilabschnitt beispielsweise plattenförmig ausgebildet und erstreckt sich im Wesentlichen geradlinig entlang der x- und y-Achse. Dabei kann der erste Aktuator 180 in der ersten Position des ersten Teilabschnitts 125 deaktiviert sein. Um eine derartige adaptive Herstellungsform 60 herzustellen, kann beim Formen des Formkörpers 115, beispielsweise in einem Spritzguss, die Urform zum Formen des Formkörpers 115 im Wesentlichen eine negative Form zu der in den Figuren 1 bis 3 gezeigten Ausgestaltung des Formkörpers 115 sein und in diese Urform der erste Aktuator 180 in deaktiviertem Zustand eingelegt werden. Alternativ kann die Form/Urform auch 3D-gedruckt werden oder gefräst werden.

Selbstverständlich kann in der ersten Position des ersten Teilabschnitts 125 auch der erste Aktuator 180 aktiviert sein, sodass der erste Aktuator 180 den ersten Teilabschnitt 125 in der ersten Position hält. In diesem Fall kann beispielsweise der Formkörper 115 derart geformt sein, dass der erste Teilabschnitt 125 beispielsweise nach oben hin (gekrümmt) in entspanntem Zustand geformt ist.

Figur 4 zeigt den in Figur 3 gezeigten Ausschnitt der Schnittansicht entlang der in Figur 1 gezeigten Schnittebene B-B.

In Figur 4 ist der erste Teilabschnitt 125 in der zweiten Position dargestellt. In der zweiten Position ist der erste Teilabschnitt 125 nach oben hin in eine Richtung von dem Grundabschnitt 145 und vom Formgrund 146 weggebogen. In der zweiten Position ist der erste Teilabschnitt 125 in Figur 4 um die x-Achse nach oben hin gekrümmt ausgebildet. Der minimale Abstand a zwischen dem ersten Teilabschnitt 125 und dem zweiten Teilabschnitt 130 ist gegenüber zu dem in Figur 3 gezeigten minimalen Abstand a vergrößert und die Öffnung 185 dadurch gegenüberFigur 3 aufgeweitet.

In der zweiten Position ist der Formkörper 115 elastisch reversibel gegenüber der ersten Position verformt. In Figur 4 ist beispielhaft der erste Teilabschnitt 125 so weit verformt, insbesondere gekrümmt, dass ein freies Ende 205 des ersten Teilabschnitts 125, das die Öffnung 185 begrenzt, einen Winkel α zusammen mit der Ebene 195 einschließt, wobei der Winkel α wenigstens 20°, vorzugsweise wenigstens 40°, vorzugsweise wenigstens 60° beträgt. Vorzugsweise ist der Winkel α kleiner oder gleich 90°, insbesondere kleiner oder gleich 70°. Dabei ist in der zweiten Position das freie Ende 205 oberhalb der zweiten Oberseite 200 des zweiten Teilabschnitts 130 angeordnet. Mit anderen Worten ist beispielhaft der erste Teilabschnitt 125 vom Formgrund 146 weggeschwenkt und beabstandet angeordnet. Alternativ wäre auch möglich, dass in der zweiten Position der erste Teilabschnitt 125 nach innen in den Formraum 160 geschwenkt ist, sodass dadurch die Öffnung 185 vergrößert ist.

Um den ersten Teilabschnitt 125 von der ersten Position (vgl. Figur 3 ) in die zweite Position (vgl. Figur 4) zu überführen, steuert die Steuereinrichtung 80 über ein als Datensignal ausgebildetes erstes Steuersignal, das die Steuereinrichtung 80 an der Schnittstelle 90 bereitstellt, den ersten Aktuator 180. Der erste Aktuator 180 bewegt den ersten Teilabschnitt 125 aus der ersten Position in die zweite Position. Dabei kann der erste Aktuator 180 den Formkörper 115, insbesondere den ersten Teilabschnitt 125, mechanisch verspannen, sodass der erste Teilabschnitt 125 eine Balkenfeder ausbildet. Um den ersten Teilabschnitt 125 in der zweiten Position zu halten, kann der erste Aktuator 180 fortwährend aktiviert sein.

Durch das nach oben oder in den Formraum 160 Schwenken des ersten Teilabschnitts 125 um den Winkel α ist die Öffnung 185 so weit aufgeweitet, dass besonders gut die elektrischen Kabel 40, 45 durch die Verlegeeinrichtung 55 in den Formraum 160 automatisiert eingelegt werden können.

Auch eignet sich durch das Hochbiegen/Niederbiegen des ersten Teilabschnitts 125 durch den ersten Aktuator 180 die adaptierbare Herstellungsform 60 ebenso zum manuellen Einlegen der elektrischen Kabel 40, 45 in den Formraum 160, da dadurch besonders gut die Öffnung 185 mit Fingern durchgriffen werden kann, ohne dass hierbei die adaptierbare Herstellungsform 60 beschädigt und/oder Finger in der Öffnung 185 eingequetscht oder verletzt werden.

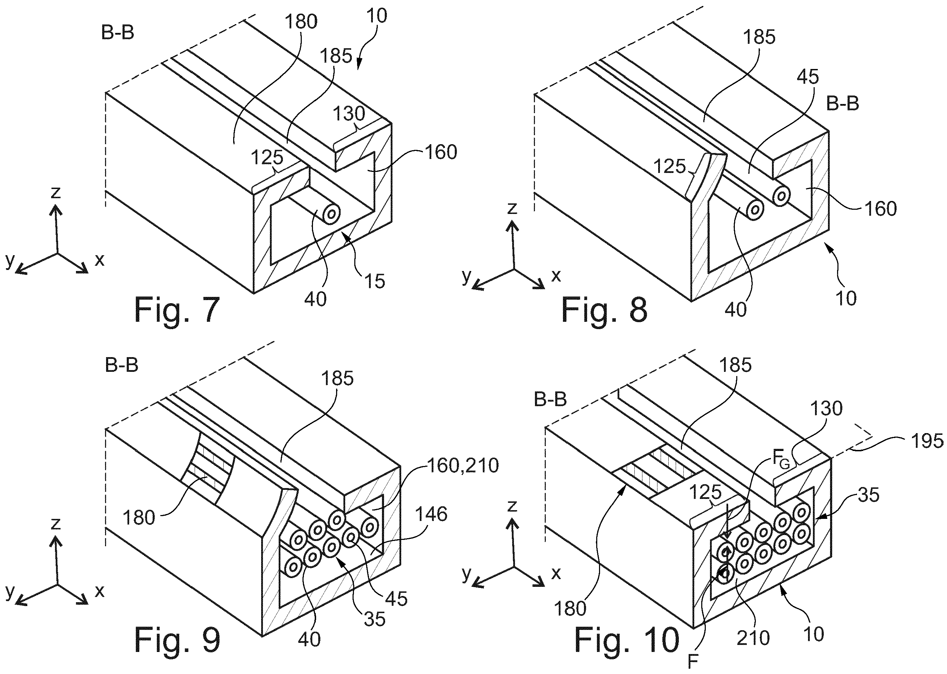

Figur 5 zeigt ein Ablaufdiagramm eines Verfahrens zur automatisierten Herstellung des Kabelbaums 15 gemäß einer ersten Ausführungsform. Figur 6 zeigt einen Ausschnitt einer Schnittansicht entlang der in Figur 2 gezeigten Schnittebene B-B durch das System 10 während eines dritten Verfahrensschritts 315. Figur 7 zeigt einen Ausschnitt einer Schnittansicht entlang der in Figur 2 gezeigten Schnittebene B-B durch das System 10 nach einem vierten Verfahrensschritt 320. Figur 8 zeigt einen Ausschnitt entlang einer in Figur 1 gezeigten Schnittebene B-B durch das in Figur 1 gezeigte System 10 während eines zweiten Durchlaufs des dritten Verfahrensschritts 315. Figur 9 zeigt einen Ausschnitt entlang der in Figur 2 gezeigten Schnittebene B-B durch das in Figur 1 gezeigte System 10 nach mehrfachem Durchlauf des dritten Verfahrensschritts 315. Figur 10 zeigt einen Ausschnitt entlang einer in Figur 1 gezeigten Schnittebene B-B durch das System 10 während eines achten Verfahrensschritts 340 zur Herstellung des Kabelbaums 15.

In einem ersten Verfahrensschritt 305 wird das in Figur 1 gezeigte System 10 bereitgestellt. Der erste Teilabschnitt 125 befindet sich beispielsweise in der ersten Position.

In einem zweiten Verfahrensschritt 310 (vgl. Figur 4) steuert die Steuereinrichtung 80 auf Grundlage des im Datenspeicher 85 abgelegten Steuerverfahrens über das an der Schnittstelle 90 bereitgestellte und über die dritte Verbindung 105 übertragene erste Steuersignal den ersten Aktuator 180 derart, sodass der erste Aktuator 180 den ersten Teilabschnitt 125 von der ersten Position in die zweite Position bewegt. Dadurch ist die Öffnung 185 aufgeweitet. Ferner wird durch den ersten Aktuator 180 der erste Teilabschnitt 125 gespannt.

In dem parallel zum zweiten Verfahrensschritt 310 durchgeführten dritten Verfahrensschritt 315 (vgl. Figur 6) steuert die Steuereinrichtung 80 mittels wenigstens eines zweiten Steuersignals, das als Datensignal ausgebildet ist und an der Schnittstelle 90 der vierten Verbindung 110 zur Übertragung an die Verlegeeinrichtung 55 bereitgestellt wird, die Verlegeeinrichtung 55 derart, dass die Verlegeeinrichtung 55, beispielsweise aus einem (in Figur 1 nicht dargestellten) Kabellager das erste elektrische Kabel 40 über die aufgeweitete Öffnung 185 in den Formraum 160 einlegt. Dabei kann das erste elektrische Kabel 40 jeweils auf der Anlagefläche 175 der Stützrippen 165 aufliegen. Das erste elektrische Kabel 40 wird durch die Stützrippen 165 derart gestützt, dass das erste elektrische Kabel 40 im Wesentlichen beabstandet zum Formgrund 146 verläuft. Dadurch, dass der zweite und dritte Verfahrensschritt 310, 315 parallel durchgeführt werden, ist das Einlegen des ersten elektrischen Kabels 40 für die Verlegeeinrichtung 55 erleichtert und ein Verhaken des ersten elektrischen Kabels 40 beim Einlegen in den Formraum 160, beispielsweise am ersten und/oder zweiten Teilabschnitt 125, 130, wird durch die aufgeweitete Öffnung 185 verhindert.

In einem auf den dritten Verfahrensschritt 315 folgenden vierten Verfahrensschritt 320 (vgl. Figur 7) steuert die Steuereinrichtung 80 den ersten Aktuator 180 mittels eines als Datensignal ausgebildeten dritten Steuersignals derart an, dass der erste Aktuator 180 den ersten Teilabschnitt 125 aus der zweiten Position wieder in die erste Position zurückbewegt. Dazu kann beispielsweise die Steuereinrichtung 80 mittels des dritten Steuersignals den ersten Aktuator 180 deaktivieren, sodass sich der erste Teilabschnitt 125 entspannt und wieder zurück in die erste Position selbsttätig bewegt.

Auch kann der erste Aktuator 180 derart durch das dritte Steuersignal gesteuert werden, dass der erste Aktuator 180 aktiv den ersten Teilabschnitt 125 in die erste Position bewegt. In der ersten Position ist der minimale Abstand a zwischen dem ersten Teilabschnitt 125 und dem zweiten Teilabschnitt 130, der der Öffnungsbreite der Öffnung 185 entspricht, vorzugsweise so gewählt, dass der minimale Abstand a kleiner als ein minimaler Außendurchmesser (des dünnsten) der elektrischen Kabel 40, 45 ist, die in dem Formraum 160 zur Ausbildung des Kabelbaums 15 eingelegt werden. Dadurch wird ein ungewolltes Herausrutschen des elektrischen Kabels 40, 45, in Figur 7 beispielsweise des ersten elektrischen Kabels 40, aus dem Formraum 160 vermieden.

Nach dem vierten Verfahrensschritt 320 werden der zweite bis vierte Verfahrensschritt 310, 315, 320 wiederholt (vgl. Figur 8), wobei jedoch im dritten Verfahrensschritt 315 statt dem ersten elektrischen Kabel 40 das zweite elektrische Kabel 45 in den Formraum 160 eingelegt wird. Dabei ist auch das Einlegen des zweiten elektrischen Kabels 45 durch die Verlegeeinrichtung 55 durch den in die zweite Position bewegbaren ersten Teilabschnitt 125 erleichtert, da auch dadurch die Öffnung 185 aufgeweitet ist und dadurch besonders gut das zweite elektrische Kabel 45 zu dem ersten elektrischen Kabel 40 in den Formraum 160 eingebracht werden kann.

Der zweite bis vierte Verfahrensschritt 310 bis 320 werden so lange wiederholt, bis die Verlegeeinrichtung 55 alle elektrischen Kabel 40, 45 zur Herstellung des Kabelbaums 15 in den Formraum 160 eingelegt hat. Die elektrischen Kabel 40, 45 bilden zusammen das Kabelbündel 35 aus (vgl. Figuren 9 und 10).

Nachdem alle elektrischen Kabel 40, 45 in den Formraum eingelegt sind, wird auf den vierten Verfahrensschritt 320 mit einem fünften Verfahrensschritt 325 fortgefahren.

Der fünfte Verfahrensschritt 325 ist im Wesentlichen identisch zum zweite Verfahrensschritt 310, sodass mittels eines erneuten ersten Steuersignals der erste Aktuator 180 aktiviert wird und der erste Aktuator 180 den ersten Teilabschnitt 125 von der ersten Position in die zweite Position bewegt. Dadurch wird die Öffnung 185 abermals aufgeweitet.

In einem auf den fünften Verfahrensschritt 325 folgenden sechsten Verfahrensschritt 330 steuert die Steuereinrichtung 80 mittels eines vierten Steuersignals die Verlegeeinrichtung 55 derart an, dass die Verlegeeinrichtung 55 beispielsweise einen Schaumwerkstoff 210 über die Öffnung 185 in den Formraum 160 einbringt.

Der Schaumwerkstoff 210 kann beispielsweise flüssig oder zähflüssig in den Formraum 160 eingebracht, insbesondere eingespritzt, werden. Der Schaumwerkstoff 210 wird beispielsweise oberseitig auf das Kabelbündel 35 aufgebracht. Dabei sackt der Schaumwerkstoff 210 in dem Formraum 160 schwerkraftbedingt in Richtung des Formgrunds 146 ab. Dabei umfließt der Schaumwerkstoff 210 die elektrischen Kabel 40, 45 derart, dass die elektrischen Kabel 40, 45 in dem Schaumwerkstoff 210 zumindest teilweise, vorzugsweise vollständig, eingebettet sind. Durch die Anordnung der Stützrippen 165 in dem Formraum 160 wird sichergestellt, dass unterseitig die elektrischen Kabel 40, 45 auch durch den Schaumwerkstoff 210 umschlossen werden. Nach Einbringen des Schaumwerkstoffs 210 durch die Verlegeeinrichtung 55 wird mit einem siebten Verfahrensschritt 335 fortgefahren.

Der siebte Verfahrensschritt 335 ist im Wesentlichen identisch zum vierten Verfahrensschritt 320 ausgebildet. Dabei steuert die Steuereinrichtung 80 den ersten Aktuator 180 mittels eines fünften Steuersignals derart an, dass der erste Aktuator 180 den ersten Teilabschnitt 125 aus der zweiten Position wieder in die erste Position zurückbewegt. Dazu kann beispielsweise die Steuereinrichtung 80 mittels des fünften Steuersignals den ersten Aktuator 180 deaktivieren und stromlos schalten, sodass sich der erste Teilabschnitt 125 entspannt und wieder zurück in die erste Position selbsttätig bewegt. Alternativ wird mittels des fünften Steuersignals der erste Aktuator 180 aktiv in die erste Position bewegt.

Dadurch, dass der erste Teilabschnitt 125 und der zweite Teilabschnitt 130 in der gemeinsamen Ebene 195 angeordnet sind und die Öffnung 185 geschlossen beziehungsweise die Öffnungsbreite der Öffnung 185 minimiert ist, wird während des Aushärtens des Schaumwerkstoffs 210 in dem siebten Verfahrensschritt 335 ein Aufschwimmen der elektrischen Kabel 40, 45 oberhalb des Schaumwerkstoffs 210 vermieden. Dadurch sind die elektrischen Kabel 40, 45 des Kabelbündels 35 im Wesentlichen vollständig in den Schaumwerkstoff 210 eingebettet.

Die Stützrippen 165 stellen sicher, dass der Schaumwerkstoff 210 im Wesentlichen vollständig das Kabelbündel 35 umfangsseitig umschließt, sodass die elektrischen Kabel 40, 45 vor Beschädigung mechanisch durch den Schaumwerkstoff 210 geschützt sind und/oder mechanisch über den Schaumwerkstoff 210 miteinander stoffschlüssig verbunden sind.

Beim Aufquellen und Aushärten des Schaumwerkstoffs 210 drückt von unten der Schauwerkstoff 210 mit einer Kraft F gegen den ersten und zweiten Teilabschnitt 125, 130.

Vorzugsweise wird in einem auf den siebten Verfahrensschritt 335 folgenden achten Verfahrensschritt 340 (vgl. Figur 10) der erste Aktuator 180 durch die Steuereinrichtung 80 mittels des fünften Steuersignals, das über die dritte Verbindung 105 von der Schnittstelle 90 bereitgestellt wird, derart angesteuert, dass der erste Aktuator 180 eine Gegenkraft F_{G} entgegen zur Kraft F bereitstellt. Die Gegenkraft F_{G} wirkt in Richtung des Formgrunds 46 (beispielsweise parallel zur z-Achse). Dabei wird der erste Aktuator 180 vorzugsweise derart angesteuert, dass die Gegenkraft F_{G} die Kraft F im Wesentlichen aufhebt.

Dadurch wird sichergestellt, dass ein Aufbiegen des ersten Teilabschnitts 125 vermieden wird. Dadurch kann auch beim Aufquellen des Schaumwerkstoffs 210 sichergestellt werden, dass der erste und zweite Teilabschnitt 125, 130 in der gemeinsamen Ebene 195 verbleiben. Dies stellt ferner sicher, dass der Kabelbaum 15 umfangsseitig im Wesentlichen eine vordefinierte geometrische Ausgestaltung beispielsweise ähnlich eines Rechtecks im Querschnitt, aufweist.

Vorzugsweise wird die Gegenkraft F_{G} während des im Wesentlichen gesamten Aushärtens des Schaumwerkstoffs 210 aufrechterhalten.

Auf den achten Verfahrensschritt 340 wird mit einem neunten Verfahrensschritt 345 fortgefahren, wobei der neunte Verfahrensschritt 345 im Wesentlichen identisch zum zweiten Verfahrensschritt 310 ist. Dabei wird der erste Aktuator 180 mittels eines weiteren ersten Steuersignals angesteuert, sodass der erste Aktuator 180 den ersten Teilabschnitt 125 aus der ersten Position in die zweite Position bewegt und den ersten Teilabschnitt 125 in der zweiten Position hält. Dabei löst sich der erste Teilabschnitt 125 innenseitig zum Schaumwerkstoff 210. Dies kann durch ein auf die innere Umfangseite 170 aufgebrachtes Trennmittel unterstützt werden.

In einem zehnten Verfahrensschritt 350 wird der Kabelbaum 15 mit dem zumindest teilweise ausgehärteten Schaumwerkstoff 210 aus dem Formraum 160 durch die geöffnete Öffnung 185, beispielsweise durch die Verlegeeinrichtung 55, entfernt. Dabei wird der zehnte Verfahrensschritt 350 teilweise parallel zum neunten Verfahrensschritt 345 durchgeführt. Dabei steuert die Steuereinrichtung 80 den ersten Aktuator 180 derart an, dass dieser den ersten Teilabschnitt 125 während des Entfernens des Kabelbaums 15 in der zweiten Position hält. Dadurch wird ein einfaches Entfernen des Kabelbaums 15 aus dem Formraum 160 gewährleistet.

Durch das Öffnen und Aufweiten der Öffnung 185 kann die Verlegeeinrichtung 55 besonders gut den Kabelbaum 15 greifen und ihn aus dem Formraum 160 automatisiert entfernen. Dabei kann der Formkörper 115, insbesondere der zweite Teilabschnitt 130 und/oder der erste und/oder zweite Seitenabschnitt 135, 150 elastisch reversibel nachgeben und beispielsweise der zweite Teilabschnitt 130 nach oben hin reversibel aufgebogen werden.

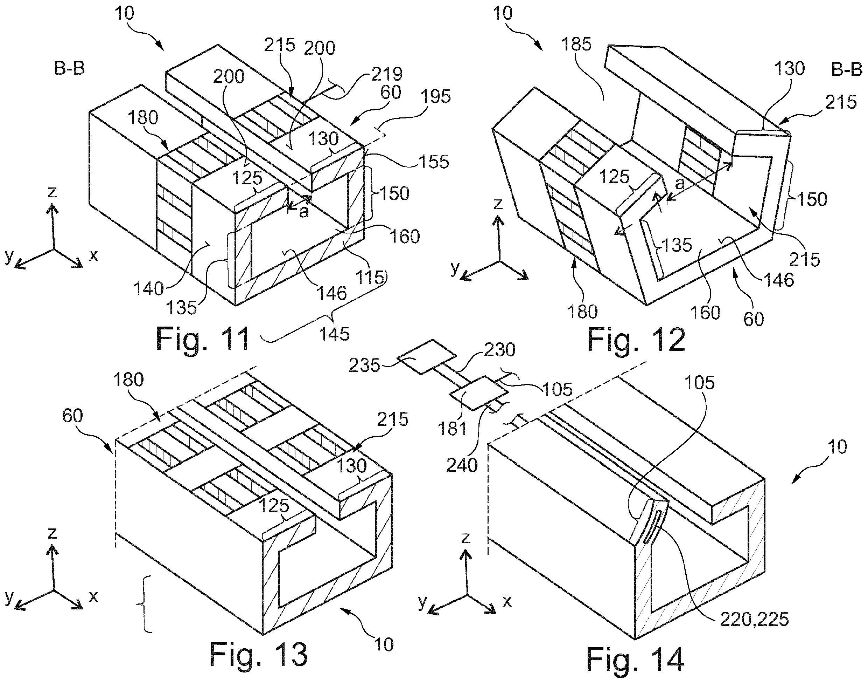

Figur 11 zeigt einen Ausschnitt einer Schnittansicht entlang der in Figur 2 gezeigten Schnittebene B-B durch ein System 10 gemäß einer zweiten Ausführungsform.

Die adaptierbare Herstellungsform 60 ist im Wesentlichen identisch zu der in den Figuren 1 bis 4 und 6 bis 10 erläuterten adaptierbaren Herstellungsform 60 ausgebildet. Im Folgenden wird ausschließlich auf die Unterschiede der in Figur 11 gezeigten adaptierbaren Herstellungsform 60 gegenüber der in den Figuren 1 bis 4 und 6 bis 10 gezeigten adaptierbaren Herstellungsform 60 eingegangen.

Zusätzlich zu der in den Figuren 1 bis 4 und6 bis 10 gezeigten adaptierbaren Herstellungsform 60 weist die in Figur 11 gezeigte adaptierbare Herstellungsform 60 zusätzlich einen zweiten Aktuator 215 auf. Zur schematischen Darstellung des zweiten Aktuators 215 ist der zweite Teilabschnitt 130 aufgebrochen in Figur 11 dargestellt.

Ferner ist die in Figur 11 gezeigte adaptierbare Herstellungsform 60 gegenüber der in den Figuren 1 bis 10 gezeigten adaptierbaren Herstellungsform 60 dahingehend variiert, dass der erste Aktuator 180 nicht nur im ersten Teilabschnitt 125, sondern auch im ersten Seitenabschnitt 135 angeordnet und vorzugsweise eingebettet ist.

In einer Alternative kann der erste Aktuator 180 an der zweiten Oberseite 200 und/oder an der ersten Seitenfläche 140 an dem Formkörper 115 angeordnet sein. Alternativ ist auch möglich, dass der erste Aktuator 180 im/am ersten Seitenabschnitt 135 angeordnet ist und auf eine Anordnung des ersten Aktuators 180 im/am ersten Teilabschnitt 125 verzichtet wird. Vorzugsweise ist der erste Aktuator 180 stoffschlüssig beispielsweise mit der zweiten Oberseite 200 des ersten Teilabschnitts 125 und/oder der ersten Seitenfläche 140 verbunden. Ist der erste Aktuator 180 ausschließlich im/am ersten Seitenabschnitt 135 angeordnet, so ist der erste Aktuator 180 indirekt mit dem ersten Teilabschnitt 125 verbunden.

Spiegelsymmetrisch zum ersten Aktuator 180 kann der zweite Aktuator 215 ausgebildet sein. Dabei erstreckt sich in Figur 11 beispielhaft der zweite Aktuator 215 im zweiten Teilabschnitt 130 und/oder im zweiten Seitenabschnitt 150. Dabei kann der zweite Aktuator 215 im zweiten Teilabschnitt 130 und/oder im zweiten Seitenabschnitt 150 in den Formkörper 115 eingebettet sein.

Alternativ kann der zweite Aktuator 215 an der zweiten Oberseite 200 des zweiten Teilabschnitts 130 und/oder an der zweiten Seitenfläche 155 des zweiten Seitenabschnitts 150 angeordnet sein und kann vorzugsweise stoffschlüssig mit dem Formkörper 115 an der zweiten Oberseite 200 des zweiten Teilabschnitts 130 und/oder an der zweiten Seitenfläche 155 des zweiten Seitenabschnitts 150 verbunden sein. Ist der erste Aktuator 180 ausschließlich im/am zweiten Seitenabschnitt 150 angeordnet, so ist der erste Aktuator 180 indirekt mit dem zweiten Teilabschnitt 130 verbunden.

Der zweite Aktuator 215 ist über eine fünfte Verbindung 219 mit der Schnittstelle 90 verbunden. Auch kann ein weiteres Steuermodul (in Figur 11 nicht dargestellt) zwischen der Schnittstelle 90 und dem zweiten Aktuator 215 vorgesehen sein. Das weitere Steuermodul ist ferner mit dem zweiten Aktuator 215 elektrisch verbunden. Auf Grundlage eines über die fünfte Verbindung 219 übertragenen sechsten bzw. siebten Steuersignals schaltet das Steuermodul 181 eine elektrische Leistungsversorgung des ersten Aktuators 180 mit elektrischer Energie frei bzw. unterbricht das Steuermodul 181 die Leistungsversorgung des zweiten Aktuators 215 oder ändert eine Polung der elektrischen Leistungsversorgung. Mittels des sechsten bzw. siebten Steuersignals ist der zweite Aktuator 215 derart ansteuerbar, dass der zweite Aktuator 215 den zweiten Teilabschnitt 130 und in Figur 11 zusätzlich den zweiten Seitenabschnitt 150 zwischen einer dritten Position und einer vierten Position bewegt. In Figur 11 sind der zweite Teilabschnitt 130 und der zweite Seitenabschnitt 150 in der dritten Position dargestellt. Dabei kann in der dritten Position des zweiten Teilabschnitts 130 und des zweiten Seitenabschnitts 150 der zweite Aktuator 215 deaktivert bzw. stromlos geschalten sein. Der zweite Aktuator 215 kann identisch zum ersten Aktuator 180 ausgebildet sein.

In der dritten Position verläuft der zweite Teilabschnitt 130 in der Ebene 195 und ist somit parallel zum Formgrund 146 ausgerichtet. Ferner verlaufen in der dritten Position der erste Seitenabschnitt 135 und der zweite Seitenabschnitt 150 parallel zueinander und beispielsweise im Wesentlichen senkrecht zu dem Formgrund 146.

Figur 12 zeigt die in Figur 11 gezeigte Schnittansicht mit der in Figur 11 gezeigten adaptierbaren Herstellungsform 60 in geöffnetem Zustand.

In Figur 12 werden sowohl der erste Aktuator 180 mit dem ersten Steuersignal als auch der zweite Aktuator 215 mit dem sechsten Steuersignal von der Steuereinrichtung 80 über die Schnittstelle 90 zeitgleich angesteuert. Dabei schwenkt der erste Aktuator 180 den ersten Teilabschnitt 125 in die zweite Position. Zusätzlich schwenkt der erste Aktuator 180 den ersten Seitenabschnitt 135 in der zweiten Position nach außen, sodass der Formraum 160 gegenüber der in Figur 11 gezeigten Ausgestaltung in Querrichtung aufgeweitet ist. Dabei wird sowohl der erste Teilabschnitt 125 als auch der erste Seitenabschnitt 135 gekrümmt um die x-Achse. Ferner ist der erste Seitenabschnitt 135 schräg nach außen vom Formgrund weggebogen.

Die Steuereinrichtung 80 steuert über die Schnittstelle 90 und die fünfte Verbindung 220 den zweiten Aktuator 215 mittels des sechsten Steuersignals derart an, dass der zweite Aktuator 215 den zweiten Teilabschnitt 130 vom Formgrund 146 weg nach oben hin in die vierte Position bewegt. Ebenso schwenkt der zweite Aktuator 215 den zweiten Seitenabschnitt 150 in der vierten Position vom ersten Seitenabschnitt 135 nach außen hin weg, sodass der Formraum 160 aufgeweitet ist. Ferner ist in der vierten Position der zweite Seitenabschnitt 150 schräg nach außen vom Formgrund 146 und vom ersten Seitenabschnitt 135 weggeschwenkt.

Diese Ausgestaltung hat den Vorteil, dass der minimale Abstand a des ersten Teilabschnitts 125 zu dem zweiten Teilabschnitt 130, der der Öffnungsbreite der Öffnung 185 entspricht, besonders stark gegenüber dem in Figur 11 gezeigten minimalen Abstand a vergrößert werden kann, sodass das Einlegen der elektrischen Kabel 40, 45 zum Ausbilden des Kabelbündels 35 als auch das Einspritzen des Schaumwerkstoffs 210 in den Formraum 160 mittels Verlegeeinrichtung 55 sowie die Entnahme des fertigen Kabelbaums 15 erleichtert ist.

Auch eignet sich die in den Figuren 11 und 12 gezeigte Ausgestaltung besonders gut, um manuell, insbesondere händisch, die elektrischen Kabel 40, 45 in den Formraum 160 einzulegen.

Das Verfahren gemäß einer zweiten Ausführungsform zur Herstellung des Kabelbaums 15 ist im Wesentlichen identisch zu dem in Figur 5 beschriebenen Herstellungsverfahren. Im Folgenden wird ausschließlich auf die Unterschiede des Verfahrens gemäß der zweiten Ausführungsform gegenüber dem Herstellungsverfahren gemäß der ersten Ausführungsform, das in Figur 5 beschrieben ist, eingegangen. Abweichend dazu schwenkt der erste Aktuator 180 zusätzlich den ersten Seitenabschnitt 135 zwischen der ersten Position (parallel zu der z-Achse ausgerichtet) und der zweiten Position (nach außen geschwenkt).

Zusätzlich steuert die Steuereinrichtung 80 mittels des fünften Steuersignals im zweiten Verfahrensschritt 310 den zweiten Aktuator 215 derart an, dass der zweite Aktuator 215 zumindest den zweiten Teilabschnitt 130 und den zweiten Seitenabschnitt 150 aus der dritten Position in die vierte Position bewegt, sodass der zweite Teilabschnitt 130 vom Formgrund 146 nach oben hin weggebogen ist und der zweite Seitenabschnitt 150 vom ersten Seitenabschnitt 135 nach außen wegschwenkt ist, sodass der Formraum 160 insgesamt aufgeweitet ist. Dabei werden der zweite Teilabschnitt 130 und der zweite Seitenabschnitt 150 aufgebogen. Auch kann die Steuereinrichtung 80 den zweiten Aktuator 215 derart steuern, dass dieser vorzugsweise analog zum ersten Teilabschnitt 125 in den Formraum 160 geschwenkt wird. Auch wäre möglich, dass der erste Teilabschnitt 125 und der zweite Teilabschnitt 130 in der zweiten Position und der vierten Position gegenläufig angeordnet sind. Dadurch kann einer der beiden Teilabschnitte 125, 130 vom Formgrund 146 weggeschwenkt und der andere Teilabschnitt 125, 130 in den Formraum 160 geschwenkt/gebogen sein.

Im vierten Verfahrensschritt 320 steuert die Steuereinrichtung 80 mittels des sechsten Steuersignals zusätzlich zum ersten Aktuator 180 den zweiten Aktuator 215 derart an, dass der zweite Teilabschnitt 130 und der zweite Seitenabschnitt 150 von der vierten Position in die dritte Position zurückschwenken oder geschwenkt werden und dadurch der erste und zweite Teilabschnitt 125, 130 das/die in den Formraum 160 eingelegte(n) elektrische(n) Kabel 40, 45 im Formraum 160 hält/halten.

Ebenso schwenkt beispielsweise der zweite Seitenabschnitt 150 von der vierten Position in die dritte Position in Richtung des ersten Seitenabschnitts 135, sodass der Formraum 160 wieder seine ursprüngliche Ausgestaltung aufweist.

Die Überführung von der vierten Position in die dritte Position kann aktiv erfolgen, sodass der zweite Aktuator 215 mit elektrischer Energie versorgt wird und aktiv den zweiten Teilabschnitt 130 und den zweiten Seitenabschnitt 150 zurückschwenkt. Alternativ kann der zweite Aktuator 215 deaktiviert werden und der im zweiten Verfahrensschritt gespannte zweite Teilabschnitt 130 und der zweite Seitenabschnitt 150 entspannen sich.

Dadurch wird im vierten Verfahrensschritt die Öffnung 185 entweder geschlossen oder der minimale Abstand a wird minimiert. Dadurch wird ein Herausrutschen der in den Formraum 160 über die Öffnung 185 eingebrachten elektrischen Kabel 40, 45 verhindert.

Analog zum zweiten und vierten Verfahrensschritt 310, 320 wird im fünften Verfahrensschritt 325 durch die Steuereinrichtung 80 mittels des fünften Steuersignals der zweite Aktuator 215 derart gesteuert, dass vor Einbringen des Schaumwerkstoffs 210 in den Formraum 160 der zweite Aktuator 215 den zweiten Teilabschnitt 130 nach oben schwenkt und den zweiten Seitenabschnitt 150 nach außen in die vierte Position wegschwenkt.

Nach Einbringen des Schaumwerkstoffs 210 steuert die Steuereinrichtung 80 im siebten Verfahrensschritt 335 den zweiten Aktuator 215 zusätzlich derart an, dass der zweite Aktuator 215 wieder den zweiten Seitenabschnitt 150 nach innen hin in Richtung des ersten Seitenabschnitts 135 und den zweiten Teilabschnitt 130 von der vierten Position in die dritte Position zurück schwenkt. Dies kann wie oben erläutert aktiv und/oder erfolgen.

Zusätzlich kann im siebten Verfahrensschritt 335 die Steuereinrichtung 80 zusammen mit dem ersten Aktuator 180 den zweiten Aktuator 215 ebenso wie den ersten Aktuator 180 derart ansteuern, dass der zweite Aktuator 215 die Gegenkraft F_{G} bereitstellt, um ein Aufbiegen des zweiten Teilabschnitts 130 und gegebenenfalls des ersten und zweiten Seitenabschnitts 135, 150 durch das Aufschäumen des Schaumwerkstoffs 210 zu verhindern.

Im neunten Verfahrensschritt 345 steuert analog zu dem zweiten und sechsten Verfahrensschritt 310, 330 die Steuereinrichtung 80 den zweiten Aktuator 215 derart an, dass dieser wieder den zweiten Teilabschnitt 130 und den zweiten Seitenabschnitt 150 aus der dritten Position in die vierte Position nach außen hin vom Formgrund 146 wegschwenkt, um ein gutes Entnehmen des Kabelbaums 15 aus dem Formraum 160 zu gewährleisten.

Figur 13 zeigt einen Ausschnitt einer Schnittansicht entlang einer in Figur 2 gezeigten Schnittebene B-B durch ein System 10 gemäß einer dritten Ausführungsform.

Das in Figur 13 gezeigte System 10 ist eine Kombination aus den in den Figuren 1 bis 4, 6 bis 12 gezeigten Systemen 10.

Im Folgenden wird ausschließlich auf die Unterschiede des in Figur 13 gezeigten Systems 10 gegenüber dem in den Figuren 11 und 12 gezeigten System 10 eingegangen.

In Figur 13 ist der zweite Aktuator 215 im Wesentlichen identisch zu dem ersten Aktuator 180 ausgebildet, wobei der erste Aktuator 180 wie in den Figuren 1 bis 10 erläutert ausgebildet ist. Dadurch erstreckt sich der erste Aktuator 180 beispielhaft ausschließlich im/am ersten Teilabschnitt 125. Der zweite Aktuator 215 ist ausschließlich im/am zweiten Teilabschnitt 130 angeordnet. Diese Ausgestaltung hat den Vorteil, dass der erste Aktuator 180 und der zweite Aktuator 215 besonders einfach und kostengünstig ausgebildet sind. Die Anordnung des zweiten Aktuators 215 im zweiten Teilabschnitt 130 hat den Vorteil, dass gegenüber der in den Figuren 1 bis 10 gezeigten Ausgestaltung des Systems 10 die Öffnung 185 weiter aufgeweitet werden kann. Dabei wird in Figur 13 der zweite Aktuator 215 mittels des fünften Steuersignals derart angesteuert, dass der zweite Aktuator 215 den zweiten Teilabschnitt 130 nach oben hin vom Formgrund 146 weg aus der dritten Position in die vierte Position bewegt, wobei in der vierten Position der zweite Teilabschnitt 130 nicht wie in der dritten Position plattenförmig, sondern gekrümmt nach oben hin ausgebildet ist.

Das Herstellungsverfahren entspricht im Wesentlichen dem in Figur 12 erläuterten Verfahren. Der erste und zweite Seitenabschnitt 135, 150 sind über das Verfahren hinweg im Wesentlichen parallel zueinander angeordnet und verbleiben während des Verfahrens in dieser Position.

Figur 14 zeigt einen Ausschnitt einer Schnittansicht entlang der in Figur 2 gezeigten Schnittebene B-B durch ein System 10 gemäß einer vierten Ausführungsform.

Das System 10 ist im Wesentlichen identisch zu den in den vorangegangenen Figuren gezeigten Systemen 10 ausgebildet. Im Folgenden wird ausschließlich auf die Unterschiede des in Figur 14 gezeigten Systems 10 gegenüber dem in den Figuren 1 bis 10 gezeigten System 10 eingegangen.

Der erste Aktuator 180 weist einen Druckraum 220 auf, wobei der Druckraum 220 mit einem Druckfluid 225 füllbar ist. Der Druckraum 220 ist fluiddicht. Der Druckraum 220 kann als schlauchartiger Freiraum in dem ersten Teilabschnitt 125 ausgebildet sein.

Das Druckfluid 225 kann beispielsweise Druckluft sein. Auch kann das Druckfluid 225 eine Flüssigkeit, beispielsweise Wasser oder eine Hydraulikflüssigkeit, sein. Das Steuermodul 181 kann ein Mehrwegeventil aufweisen, das mittels einer ersten Fluidleitung 230 mit einem Druckspeicher 235 fluidisch verbunden ist. Der Druckspeicher 235 speichert das druckbeaufschlagte Druckfluid 225. Das Steuermodul 181 ist ferner fluidisch mittels einer zweiten Fluidleitung 240 mit dem Druckraum 220 verbunden. Ferner ist das Steuermodul 181 mittels der dritten Verbindung 105 datentechnisch mit der Schnittstelle 90 verbunden.

Der Formkörper 115 ist dabei derart ausgebildet, dass der Formkörper 115 die erste Position und gegebenenfalls, sollte ein zweiter Aktuator 215 vorgesehen sein, die dritte Position, beispielsweise in entlastetem Zustand des Druckraums 220, einnimmt.

Die Steuereinrichtung 80 steuert den ersten Aktuator 180 über das Steuermodul 181 an. Dabei verbindet das Steuermodul 181 bei Bereitstellung des ersten Steuersignals den Druckraum 220 fluidisch mit dem Druckspeicher 235, sodass das Druckfluid 225 aus dem Druckspeicher 235 druckbeaufschlagt in den Druckraum 220 strömt.

Durch die Druckbeaufschlagung wird beispielsweise der erste Teilabschnitt 125 vom Formgrund 146 weg nach oben hin geschwenkt, sodass die Öffnung 185, wie in Figur 14 gezeigt, aufgeweitet ist.

Um den ersten Teilabschnitt 125 von der zweiten Position in die erste Position zu bewegen, trennt das Steuermodul 181 die fluidische Verbindung zwischen Druckraum 220 und Druckspeicher 235 und erlaubt ein Ausströmen des Druckfluids 225 aus dem Druckraum 220. Dabei drückt der Werkstoff des Formkörpers 115 das entspannte Druckfluid 225 aus dem Druckraum 220. Durch die Entspannung des Druckfluids 225 wird der beim Schwenken aus der ersten Position in die zweite Position gespannte erste Teilabschnitt 125 entlastet und durch die Entlastung bewegt sich der erste Teilabschnitt 125 von der zweiten Position zurück in die erste Position.

Alternativ wäre auch denkbar, dass das Druckfluid 225 im Druckraum 220 druckbeaufschlagt ist, wenn der erste Teilabschnitt 125 sich in der ersten Position befindet und zum Überführen des ersten Teilabschnitts 125 in die zweite Position das Druckfluid 225 im Druckraum 220 entlastet wird. In diesem Fall ist der erste Werkstoff des Formkörpers 115 in der ersten Position durch das druckbeaufschlagte Druckfluid 225 gespannt, während hingegen in der zweiten Position der erste Werkstoff des ersten Teilabschnitts 125 entspannt ist. Diese Ausgestaltung hat den Vorteil, dass insbesondere im achten Verfahrensschritt 340 durch die Druckbeaufschlagung des Druckfluids 225 im Druckraum 220 auf einfache Weise die Betätigungskraft F_{B} bereitgestellt werden kann, um der Kraft F des aufschäumenden Schaumwerkstoffs 210 entgegenzuwirken und ein zuverlässiges Niederhalten des Kabelbündels 35 im Formraum 160 sicherzustellen.

Zusammengefasst bietet die adaptierbare Herstellungsform 60 die Möglichkeit, den Kabelbaum 15 vollautomatisiert herzustellen. Ferner ist das Einlegen der elektrischen Kabel 40, 45 erleichtert und kann dadurch vollautomatisiert durch die Verlegeeinrichtung 55 erfolgen.

In einer Weiterbildung kann das in den Figuren 1 bis 14 gezeigte System 10 für ein händisches Einlegen der elektrischen Kabel 40, 45 in den Formraum 160 dahingehend adaptiert sein, dass beispielsweise ein Schalter vorgesehen ist. Mittels des Schalters, der von dem Einlegenden bedient wird und beispielsweise als Fußschalter ausgebildet sein kann, kann der erste Aktuator 180 und/oder der zweite Aktuator 215 gesteuert werden.

Dadurch kann der Bediener auf einfache Art und Weise die Öffnung 185 aufweiten, um beim manuellen Einlegen der elektrischen Kabel 40, 45 den Formraum 160 gut zugänglich für sich aufzufinden und nach Einlegen des elektrischen Kabels 40, 45 mittels des Schalters wieder den Formraum 160 durch den ersten und/oder zweiten Aktuator 180, 215 zu schließen.

### Bezugszeichen

- 10: System
- 15: Kabelbaum
- 20: erste Kontakteinrichtung
- 25: zweite Kontakteinrichtung
- 30: dritte Kontakteinrichtung
- 35: Kabelbündel
- 40: erstes elektrisches Kabel
- 45: zweites elektrisches Kabel
- 50: Steuergerät
- 55: Verlegeeinrichtung
- 60: adaptierbare Herstellungsform
- 65: Formbrett
- 70: erste Oberseite (des Formbretts)
- 75: Befestigungsmittel
- 80: Steuereinrichtung
- 85: Datenspeicher
- 90: Schnittstelle
- 95: erste Verbindung
- 100: zweite Verbindung
- 105: dritte Verbindung
- 110: vierte Verbindung
- 115: Formkörper
- 120: Unterseite (des Formkörpers)
- 125: erster Teilabschnitt
- 130: zweiter Teilabschnitt
- 135: erster Seitenabschnitt
- 140: erste Seitenfläche
- 145: Grundabschnitt
- 146: Formgrund
- 150: zweiter Seitenabschnitt
- 155: zweite Seitenfläche
- 160: Formraum
- 165: Stützrippe
- 170: innere Umfangsseite
- 175: Anlagefläche
- 180: erster Aktuator
- 181: Steuermodul
- 185: Öffnung
- 190: Umgebung
- 195: Ebene
- 200: zweite Oberseite
- 205: freies Ende
- 210: Schaumwerkstoff
- 215: zweiter Aktuator
- 219: fünfte Verbindung
- 220: Druckraum
- 225: Druckfluid
- 230: erste Fluidleitung
- 235: Druckspeicher
- 240: zweite Fluidleitung

- 305: erster Verfahrensschritt
- 310: zweiter Verfahrensschritt
- 315: dritter Verfahrensschritt
- 320: vierter Verfahrensschritt
- 325: fünfter Verfahrensschritt
- 330: sechster Verfahrensschritt
- 335: siebter Verfahrensschritt
- 340: achter Verfahrensschritt
- 345: neunter Verfahrensschritt
- 350: zehnter Verfahrensschritt

- α: Winkel
- F: Kraft
- F_{B}: Betätigungskraft
- F_{G}: Gegenkraft

## Patentansprüche

1. Herstellungsform (60) zur Herstellung eines Kabelbaums (15) für ein Fahrzeug,
- wobei die Herstellungsform (60) einen Formkörper (115) und wenigstens einen ersten Aktuator (180) aufweist,
- wobei der Formkörper (115) aus einem elastisch reversibel verformbaren Werkstoff ausgebildet ist und einen Formraum (160) zumindest abschnittweise umschließt,
- wobei der erste Aktuator (180) mit einem ersten Teilabschnitt (125) des Formkörpers (115) gekoppelt ist,
- wobei der erste Teilabschnitt (125) innenseitig zumindest abschnittsweise den Formraum (160) begrenzt,
- wobei in dem Formraum (160) der Kabelbaum (15) zumindest herstellbar ist,
- wobei der erste Aktuator (180) ausgebildet ist, den ersten Teilabschnitt (125) zwischen einer ersten Position und einer zur ersten Position unterschiedlichen zweiten Position reversibel zu verschwenken.

2. Herstellungsform (60) nach Anspruch 1,
- wobei der Formkörper (115) eine Öffnung (185) zum Einbringen zumindest eines elektrischen Kabels (40, 45) in den Formraum (160) aufweist,
- wobei die Öffnung (185) in dem Formraum (160) mündet,
- wobei der erste Teilabschnitt (125) an die Öffnung (185) angrenzt,
- wobei in der zweiten Position des ersten Teilabschnitts (125) die Öffnung (185) gegenüber der ersten Position des ersten Teilabschnitts (125) aufgeweitet ist.

3. Herstellungsform (60) nach Anspruch 1 oder 2,
- wobei der Formkörper (115) einen Formgrund (146) aufweist,
- wobei in der ersten Position der erste Teilabschnitt (125) parallel oder schräg geneigt zum Formgrund (146) ausgerichtet ist,
- wobei in der zweiten Position der erste Teilabschnitt (125) vom Formgrund (146) weiter beabstandet ist als in der ersten Position,
- wobei insbesondere in der zweiten Position der erste Teilabschnitt (125) vom Formgrund (146) aus der ersten Position weggebogen und/oder weggeschwenkt ist,
- oder
- wobei in der zweiten Position der erste Teilabschnitt (125) näher zum Formgrund (146) angeordnet ist als in der ersten Position,
- wobei insbesondere in der zweiten Position der erste Teilabschnitt (125) zum Formgrund (146) aus der ersten Position hingebogen oder hingeschwenkt ist.

4. Herstellungsform (60) nach einem der vorhergehenden Ansprüche,
- wobei die adaptierbare Herstellungsform (60) einen zweiten Aktuator (215) aufweist,
- wobei der Formkörper (115) einen zweiten Teilabschnitt (130) aufweist,
- wobei der zweite Teilabschnitt (130) versetzt zu dem ersten Teilabschnitt (125) angeordnet ist,
- wobei der zweite Aktuator (215) an und/oder in dem zweiten Teilabschnitt (130) angeordnet ist,
- wobei der zweite Aktuator (215) ausgebildet ist, den zweiten Teilabschnitt (130) zwischen einer dritten Position und einer zur dritten Position unterschiedlichen vierten Position reversibel zu verschwenken, insbesondere zu verformen.

5. Herstellungsform (60) nach Anspruch 4,
- wobei die Öffnung (185) sich in ihrer Haupterstreckungsrichtung entlang einer ersten Richtung erstreckt,
- wobei der zweite Teilabschnitt (130) gegenüberliegend in einer zweiten Richtung senkrecht zu der ersten Richtung zu dem ersten Teilabschnitt (125) angeordnet ist und gegenüberliegend zu dem ersten Teilabschnitt (125) die Öffnung (185) zumindest abschnittsweise begrenzt,
- wobei in der ersten Position des ersten Teilabschnitts (125) und in der dritten Position des zweiten Teilabschnitts (130) die Öffnung (185) eine erste minimale Öffnungsbreite in der zweiten Richtung aufweist,
- wobei in der zweiten Position des ersten Teilabschnitts (125) und in der vierten Position des zweiten Teilabschnitts (130) die Öffnung (185) eine zweite minimale Öffnungsbreite in der zweiten Richtung aufweist, die größer ist als die erste Öffnungsbreite.

6. Herstellungsform (60) nach einem der vorhergehenden Ansprüche,
- wobei der erste Aktuator (180) außenseitig des Formkörpers (115) angeordnet ist,
- und/oder
- wobei der erste Aktuator (180) in den Formkörper (115) zumindest abschnittsweise, vorzugsweise vollständig, eingebettet ist,
- und/oder
- wobei der Formkörper (115) einstückig und materialeinheitlich ausgebildet ist.

7. Herstellungsform (60) nach einem der vorhergehenden Ansprüche,
- wobei der erste Aktuator (180) wenigstens einen Druckraum (220) aufweist,
- wobei der Druckraum (220) mit einem druckbeaufschlagten Druckfluid (225) füllbar ist, um den ersten Teilabschnitt (125) zwischen der ersten Position und der zweiten Position zu bewegen
- und/oder
- wobei der erste Aktuator (180) als dielektrischer Elastomer-Aktor ausgebildet ist.

8. Herstellungsform (60) nach einem der vorhergehenden Ansprüche,
- wobei der erste Aktuator (180) ausgebildet ist, beim Schwenken des ersten Teilabschnitts (125) zwischen der ersten Position und der zweiten Position den Formkörper (115) elastisch reversibel zu verformen
- und/oder
- wobei in der zweiten Position der erste Teilabschnitt (125) gegenüber der ersten Position einen Winkel (α) einschließt,
- wobei der Winkel (α) wenigstens 20°, vorzugsweise wenigstens 40°, vorzugsweise wenigstens 60° beträgt.

9. System (10)
- mit einem Steuergerät (50) und einer adaptierbaren Herstellungsform (60) nach einem der vorhergehenden Ansprüche,
- wobei das Steuergerät (50) mit dem ersten Aktuator (180) verbunden ist,
- wobei das Steuergerät (50) ausgebildet ist, den ersten Aktuator (180) derart zu steuern, dass der erste Aktuator (180) den ersten Teilabschnitt (125) zwischen der ersten Position und der zweiten Position bewegt.

10. Verfahren zur Herstellung eines Kabelbaums (15),
- wobei eine adaptierbare Herstellungsform (60) gemäß einem der Ansprüche 1 bis 8 bereitgestellt wird,
- wobei der erste Aktuator (180) den ersten Teilabschnitt (125) aus der ersten Position in die zweite Position bewegt,
- wobei wenigstens ein erstes elektrisches Kabel (40) zur Ausbildung eines Kabelbündels (35) des Kabelbaums (15) in den Formraum (160) eingelegt wird,
- wobei während des Einlegens des ersten elektrischen Kabels (40) und/oder während einer Entnahme des Kabelbaums (15) aus dem Formraum (160) der erste Teilabschnitt (125) sich in der zweiten Position befindet.

11. Verfahren nach Anspruch 10,
- wobei zeitlich nach Einlegen des ersten elektrischen Kabels (40) in den Formraum (160) der erste Aktuator (180) den ersten Teilabschnitt (125) aus der zweiten Position in die erste Position bewegt und in der ersten Position der erste Teilabschnitt (125) das erste elektrische Kabel (40) in dem Formraum (160) sichert
- und/oder
- wobei der erste Aktuator (180) beim Schwenken des ersten Teilabschnitts (125) zwischen der ersten Position und der zweiten Position den Formkörper (115) elastisch reversibel verformt.

12. Verfahren nach einem der Ansprüche 10 oder 11,
- wobei der erste Aktuator (180) den ersten Teilabschnitt (125) aus der ersten Position in die zweite Position bewegt, um ein Formraum (160) einen Schaumwerkstoff (210) einzubringen,
- wobei in den Formraum (160) der Schaumwerkstoff (210) eingebracht wird,
- wobei der Schaumwerkstoff (210) das Kabelbündel (35) zumindest abschnittsweise derart umfließt, dass das Kabelbündel (35) in dem Schaumwerkstoff (210) zumindest abschnittweise eingebettet ist,
- wobei der Schaumwerkstoff (210) zumindest teilweise ausgehärtet wird.

13. Verfahren nach Anspruch 12,
- wobei der erste Aktuator (180) während des Aufschäumens des Schaumwerkstoffs (210) derart angesteuert wird, dass der erste Aktuator (180) eine Gegenkraft (F_{G}) bereitstellt, die ein Aufbiegen des ersten Teilabschnitts (125) durch den aufschäumenden Schaumwerkstoff (210) reduziert oder verhindert.

14. Verfahren nach einem der Ansprüche 10 bis 13,
- wobei der Schaumwerkstoff (210) zumindest teilweise ausgehärtet wird,
- wobei zeitlich nach zumindest teilweisem Aushärten des Schaumwerkstoffs (210) der erste Aktuator (180) den ersten Teilabschnitt (125) von der ersten Position in die zweite Position bewegt und der Kabelbaum (15) aus dem Formraum (160) entnommen wird.

15. Verfahren nach einem der Ansprüche 10 bis 14 unter Verwendung einer Herstellungsform (60) nach Anspruch 4,
- wobei der zweite Aktuator (215) zum Einlegen des ersten elektrischen Kabels (40) in den Formraum (160) den zweiten Teilabschnitt (130) von der dritten Position in die vierte Position bewegt,
- wobei das erste elektrische Kabel (40) zwischen dem ersten Teilabschnitt (125) und dem zweiten Teilabschnitt (130) in den Formraum (160) eingelegt wird.

## Claims

1. Manufacturing mould (60) for manufacturing a cable harness (15) for a vehicle,
- wherein the manufacturing mould (60) comprises a mould body (115) and at least a first actuator (180),
- wherein the mould body (115) is formed from an elastically reversibly deformable material and at least partially surrounds a mould cavity (160),
- wherein the first actuator (180) is coupled to a first partial portion (125) of the mould body (115),
- wherein the first partial portion (125) at least partially delimits the mould cavity (160) on the inside,
- wherein the cable harness (15) can at least be manufactured in the mould cavity (160),
- wherein the first actuator (180) is configured to reversibly pivot the first partial portion (125) between a first position and a second position which is different from the first position.

2. Manufacturing mould (60) according to Claim 1,
- wherein the mould body (115) has an opening (185) for introducing at least one electrical cable (40, 45) into the mould cavity (160),
- wherein the opening (185) opens into the mould cavity (160),
- wherein the first partial portion (125) adjoins the opening (185),
- wherein, in the second position of the first partial portion (125), the opening (185) is widened relative to the first position of the first partial portion (125).

3. Manufacturing mould (60) according to Claim 1 or 2,
- wherein the mould body (115) has a mould base (146),
- wherein, in the first position, the first partial portion (125) is oriented parallel or inclined obliquely to the mould base (146),
- wherein, in the second position, the first partial portion (125) is spaced further apart from the mould base (146) than in the first position,
- wherein, in particular in the second position, the first partial portion (125) is bent away and/or pivoted away from the mould base (146) from the first position,
- or
- wherein, in the second position, the first partial portion (125) is arranged closer to the mould base (146) than in the first position,
- wherein, in particular in the second position, the first partial portion (125) is bent or pivoted towards the mould base (146) from the first position.

4. Manufacturing mould (60) according to one of the preceding claims,
- wherein the adaptable manufacturing mould (60) has a second actuator (215),
- wherein the mould body (115) has a second partial portion (130),
- wherein the second partial portion (130) is arranged offset relative to the first partial portion (125),
- wherein the second actuator (215) is arranged on and/or in the second partial portion (130),
- wherein the second actuator (215) is configured to pivot, in particular to deform, the second partial portion (130) reversibly between a third position and a fourth position which is different from the third position.

5. Manufacturing mould (60) according to Claim 4,
- wherein the opening (185) extends in its main direction of extent in a first direction,
- wherein the second partial portion (130) is arranged opposite the first partial portion (125) in a second direction perpendicular to the first direction and at least partially delimits the opening (185) opposite the first partial portion (125),
- wherein, in the first position of the first partial portion (125) and in the third position of the second partial portion (130), the opening (185) has a first minimum opening width in the second direction,
- wherein, in the second position of the first partial portion (125) and in the fourth position of the second partial portion (130), the opening (185) has a second minimum opening width in the second direction, which is larger than the first opening width.

6. Manufacturing mould (60) according to one of the preceding claims,
- wherein the first actuator (180) is arranged on the outside of the mould body (115),
- and/or
- wherein the first actuator (180) is at least partially, preferably entirely, embedded in the mould body (115),
- and/or
- wherein the mould body (115) is configured in one piece and in one material.

7. Manufacturing mould (60) according to one of the preceding claims,
- wherein the first actuator (180) has at least one pressure chamber (220),
- wherein the pressure chamber (220) can be filled with a pressurized pressure fluid (225) in order to move the first partial portion (125) between the first position and the second position,
- and/or
- wherein the first actuator (180) is configured as a dielectric elastomer actuator.

8. Manufacturing mould (60) according to one of the preceding claims,
- wherein the first actuator (180) is configured to elastically reversibly deform the mould body (115) when the first partial portion (125) is pivoted between the first position and the second position,
- and/or
- wherein, in the second position, the first partial portion (125) encloses an angle (α) relative to the first position,
- wherein the angle (α) is at least 20°, preferably at least 40°, preferably at least 60°.

9. System (10)
- having a control apparatus (50) and an adaptable manufacturing mould (60) according to one of the preceding claims,
- wherein the control apparatus (50) is connected to the first actuator (180),
- wherein the control apparatus (50) is configured to control the first actuator (180) such that the first actuator (180) moves the first partial portion (125) between the first position and the second position.

10. Method for manufacturing a cable harness (15),
- wherein an adaptable manufacturing mould (60) according to one of Claims 1 to 8 is provided,
- wherein the first actuator (180) moves the first partial portion (125) from the first position into the second position,
- wherein at least a first electrical cable (40) is inserted into the mould cavity (160) for formation of a cable bundle (35) of the cable harness (15),
- wherein, during the insertion of the first electrical cable (40) and/or during a removal of the cable harness (15) from the mould cavity (160), the first partial portion (125) is in the second position.

11. Method according to Claim 10,
- wherein, after insertion of the first electrical cable (40) into the mould cavity (160), the first actuator (180) moves the first partial portion (125) from the second position into the first position and, in the first position, the first partial portion (125) secures the first electrical cable (40) in the mould cavity (160),
- and/or
- wherein the first actuator (180) elastically reversibly deforms the mould body (115) when the first partial portion (125) is pivoted between the first position and the second position.

12. Method according to one of Claims 10 or 11,
- wherein the first actuator (180) moves the first partial portion (125) from the first position into the second position in order to introduce a foam material (210) into a mould cavity (160),
- wherein the foam material (210) is introduced into the mould cavity (160),
- wherein the foam material (210) flows at least partially around the cable bundle (35) such that the cable bundle (35) is at least partially embedded in the foam material (210),
- wherein the foam material (210) is at least partially cured.

13. Method according to Claim 12,
- wherein the first actuator (180) is activated during the foaming of the foam material (210) such that the first actuator (180) provides a counter-force (F_{G}) which reduces or prevents the bending up of the first partial portion (125) due to the foaming foam material (210).

14. Method according to one of Claims 10 to 13,
- wherein the foam material (210) is at least partially cured,
- wherein, after at least partial curing of the foam material (210), the first actuator (180) moves the first partial portion (125) from the first position into the second position and the cable harness (15) is removed from the mould cavity (160).

15. Method according to one of Claims 10 to 14 using a manufacturing mould (60) according to Claim 4,
- wherein, for inserting the first electrical cable (40) into the mould cavity (160), the second actuator (215) moves the second partial portion (130) from the third position into the fourth position,
- wherein the first electrical cable (40) is inserted into the mould cavity (160) between the first partial portion (125) and the second partial portion (130).

## Revendications

1. Moule de fabrication (60) destiné à la fabrication d'un faisceau de câbles (15) d'un véhicule,
- le moule de fabrication (60) comportant un corps de moule (115) et au moins un premier actionneur (180),
- le corps de moule (115) étant formé à partir d'une matière déformable de manière élastique et réversible et renfermant au moins par portions un espace de moule (160),
- le premier actionneur (180) étant accouplé à une première portion (125) du corps de moule (115),
- la première portion (125) délimitant l'espace de moule (160) du côté intérieur au moins par portions,
- le faisceau de câbles (15) pouvant au moins être fabriqué dans l'espace de moule (160),
- le premier actionneur (180) étant conçu pour faire pivoter de manière réversible la première portion (125) entre une première position et une deuxième position différente de la première position.

2. Moule de fabrication (60) selon la revendication 1,
- le corps de moule (115) comportant une ouverture (185) destinée à introduire au moins un câble électrique (40, 45) dans l'espace de moule (160),
- l'ouverture (185) débouchant dans l'espace de moule (160),
- la première portion (125) étant adjacente à l'ouverture (185),
- lorsque la première portion (125) est dans la deuxième position, l'ouverture (185) étant élargie par rapport à la première position de la première portion (125).

3. Moule de fabrication (60) selon la revendication 1 ou 2,
- le corps de moule (115) comportant un fond de moule (146),
- dans la première position la première portion (125) étant orientée parallèlement ou inclinée obliquement par rapport au fond de moule (146),
- dans la deuxième position la première portion (125) étant plus éloignée du fond de moule (146) que dans la première position,
- en particulier dans la deuxième position, la première portion (125) étant écartée du fond de moule (146) par pliage et/ou pivotement à partir de la première position,
- ou
- dans la deuxième position la première portion (125) étant disposée plus près du fond de moule (146) que dans la première position,
- en particulier dans la deuxième position la première portion (125) étant amenée vers le fond de moule (146) par pliage ou pivotement à partir de la première position.

4. Moule de fabrication (60) selon l'une des revendications précédentes,
- le moule de fabrication adaptable (60) comportant un deuxième actionneur (215),
- le corps de moule (115) comportant une deuxième portion (130),
- la deuxième portion (130) étant disposée de manière décalé par rapport à la première portion (125),
- le deuxième actionneur (215) étant disposé sur et/ou dans la deuxième portion (130),
- le deuxième actionneur (215) étant conçu pour faire pivoter, notamment déformer, de manière réversible la deuxième portion (130) entre une troisième position et une quatrième position différente de la troisième position.

5. Moule de fabrication (60) selon la revendication 4,
- l'ouverture (185) s'étendant dans sa direction d'extension principale selon une première direction,
- la deuxième portion (130) étant disposée à l'opposé de la première portion (125) dans une deuxième direction perpendiculaire à la première direction et délimitant l'ouverture (185) au moins par portions à l'opposé de la première portion (125),
- lorsque la première portion (125) est dans la première position et que la deuxième portion (130) est dans la troisième position, l'ouverture (185) a une première largeur d'ouverture minimale dans la deuxième direction,
- lorsque la première portion (125) est dans la deuxième position et que la deuxième portion (130) est dans la quatrième position, l'ouverture (185) a une deuxième largeur d'ouverture minimale dans la deuxième direction qui est supérieure à la première largeur d'ouverture.

6. Moule de fabrication (60) selon l'une des revendications précédentes,
- le premier actionneur (180) étant disposé à l'extérieur du corps de moule (115),
- et/ou
- le premier actionneur (180) étant incorporé dans le corps de moule (115) au moins par portions, de préférence complètement,
- et/ou
- le corps de moule (115) étant conçu d'une seule pièce et d'une même matière.

7. Moule de fabrication (60) selon l'une des revendications précédentes,
- le premier actionneur (180) comportant au moins une chambre de pression (220),
- la chambre de pression (220) pouvant être remplie d'un fluide sous pression (225) afin de déplacer la première portion (125) entre la première position et la deuxième position
- et/ou
- le premier actionneur (180) étant conçu comme un actionneur en élastomère diélectrique.

8. Moule de fabrication (60) selon l'une des revendications précédentes,
- le premier actionneur (180) étant conçu pour déformer de manière élastique et réversible le corps de moule (115) lorsque la première portion (125) pivote entre la première position et la deuxième position
- et/ou
- dans la deuxième position la première portion (125) formant un angle (α) par rapport à la première position,
- l'angle (α) étant d'au moins 20°, de préférence d'au moins 40°, de préférence d'au moins 60°.

9. Système (10) comprenant
- une unité de commande (50) et un moule de fabrication adaptable (60) selon l'une des revendications précédentes,
- l'unité de commande (50) étant reliée au premier actionneur (180),
- l'unité de commande (50) étant conçue pour commander le premier actionneur (180) de telle sorte que le premier actionneur (180) déplace la première portion (125) entre la première position et la deuxième position.

10. Procédé de fabrication d'un faisceau de câbles (15),
- un moule de fabrication adaptable (60) selon l'une des revendications 1 à 8 étant prévu,
- le premier actionneur (180) déplaçant la première portion (125) de la première position à la deuxième position,
- au moins un premier câble électrique (40) étant inséré dans l'espace de moule (160) pour former un toron de câbles (35) du faisceau de câbles (15),
- la première portion (125) étant dans la deuxième position lors de l'insertion du premier câble électrique (40) et/ou lors du retrait du faisceau de câbles (15) de l'espace de moule (160).

11. Procédé selon la revendication 10,
- chronologiquement après avoir inséré le premier câble électrique (40) dans l'espace de moule (160), le premier actionneur (180) déplaçant la première portion (125) de la deuxième position à la première position et dans la première position la première portion (125) fixant le premier câble électrique (40) dans l'espace de moule (160),
- et/ou
- le premier actionneur (180) déformant de manière élastique et réversible le corps de moule (115) lorsque la première portion (125) pivote entre la première position et la deuxième position.

12. Procédé selon l'une des revendications 10 ou 11,
- le premier actionneur (180) déplaçant la première portion (125) de la première position à la deuxième position afin d'introduire une matière alvéolaire (210) dans un espace de moule (160),
- la matière alvéolaire (210) étant introduite dans l'espace de moule (160),
- la matière alvéolaire (210) s'écoulant au moins par portions autour du toron de câbles (35) de telle sorte que le toron de câbles (35) soit au moins par portions noyé dans la matière alvéolaire (210),
- la matière alvéolaire (210) étant au moins partiellement durcie.

13. Procédé selon la revendication 12,
- le premier actionneur (180) étant commandé pendant le moussage de la matière alvéolaire (210) de telle manière que le premier actionneur (180) fournisse une force antagoniste (F_{G}) qui réduit ou empêche la première portion (125) de se déplier en raison du moussage de la matière alvéolaire (210).

14. Procédé selon l'une des revendications 10 à 13,
- la matière alvéolaire (210) étant durcie au moins partiellement,
- chronologiquement après le durcissement au moins partiel de la matière alvéolaire (210), le premier actionneur (180) déplaçant la première portion (125) de la première position à la deuxième position et le faisceau de câbles (15) étant retiré de l'espace de moule (160).

15. Procédé selon l'une des revendications 10 à 14 à l'aide d'un moule de fabrication (60) selon la revendication 4,
- le deuxième actionneur (215) déplaçant la deuxième portion (130) de la troisième position à la quatrième position afin d'insérer le premier câble électrique (40) dans l'espace de moule (160),
- le premier câble électrique (40) étant inséré dans l'espace de moule (160) entre la première portion (125) et la deuxième portion (130).
